(19) Europäisches Patentamt
European Patent Office
Office européen des brevets

(11) **EP 4 130 070 A1**

(12) **EUROPEAN PATENT APPLICATION**
published in accordance with Art. 153(4) EPC

(43) Date of publication:
**08.02.2023 Bulletin 2023/06**

(21) Application number: **21778901.5**

(22) Date of filing: **25.03.2021**

(51) International Patent Classification (IPC):
$C08F\ 267/06^{(1974.07)}$    $C08L\ 51/06^{(1974.07)}$
$C09J\ 133/12^{(1990.01)}$    $C09J\ 175/06^{(1990.01)}$
$C08G\ 18/42^{(1974.07)}$    $C08G\ 18/48^{(1974.07)}$

(52) Cooperative Patent Classification (CPC):
C08G 18/4825; C08F 267/06; C08G 18/4063;
C08G 18/4238; C08G 18/4808; C08G 18/6229;
C08G 18/7671; C08L 51/06; C09J 133/12;
C09J 175/08; C08G 2170/20

(86) International application number:
**PCT/JP2021/012581**

(87) International publication number:
**WO 2021/200558 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2020 JP 2020061289**

(71) Applicant: **Mitsubishi Chemical Corporation
Chiyoda-ku
Tokyo 100-8251 (JP)**

(72) Inventor: **OKA Kazuyuki
Tokyo 100-8251 (JP)**

(74) Representative: **TBK
Bavariaring 4-6
80336 München (DE)**

(54) **ACRYLIC RESIN POWDER, RESIN COMPOSITION, HOT-MELT ADHESIVE COMPOSITION INCLUDING ACRYLIC RESIN POWDER, AND PRODUCTION METHOD THEREFOR**

(57) The present invention relates to an acrylic resin powder containing a multistage polymer (G) having an alkyl (meth)acrylate ester (ma) monomer unit and an alkyl (meth)acrylate ester (mb) monomer unit, in which an alkyl group in the alkyl (meth)acrylate esters (ma) and (mb) has 4 to 8 carbon atoms, a glass transition temperature of the multistage polymer (G) is 50°C or higher, a mass average molecular weight is 10,000 or more and 300,000 or less, a softening temperature that is measured by a flow tester temperature-rising method is 150°C to 200°C, and the acrylic resin powder is soluble in acetone

EP 4 130 070 A1

**Description**

[Technical Field]

The present invention relates to an acrylic resin powder, a resin composition, a hot-melt adhesive composition including an acrylic resin powder, and a production method therefor.
Priority is claimed on Japanese Patent Application No. 2020-061289 filed in Japan on March 30, 2020, the contents of which are incorporated herein by reference.

[Background Art]

A hot-melt adhesive is an adhesive that is solid or semi-solid at room temperature and melts and has fluidity when heated. In particular, adhesives containing a urethane prepolymer having an isocyanate group at a terminal as the main component are referred to as reactive hot-melt adhesives, most of which are moisture-curable urethane adhesives, and usually in the form of a urethane prepolymer containing an isocyanate group, which is obtained by condensation-polymerizing a polyol component and an isocyanate component.
These reactive hot-melt adhesives are applied onto a base material in a heat-melted state and, after cooling and solidifying, moisture curing occurs due to a chemical cross-linking reaction between an isocyanate group and water, thereby resulting in the formation of a film (adhesion layer) having high heat resistance and chemical resistance.
A reactive hot-melt adhesive in the related art exhibits excellent adhesiveness in a case where a chemical cross-linking is formed by moisture curing. However, the reactive hot-melt adhesive hardly causes chemical cross-linking immediately after coating. In addition, the initial adhesive strength to a base material is not sufficient due to the fluidity of the thermoplastic polymer, which is caused by the fact that the temperature of the adhesive is high immediately after heat-melting. The initial adhesive strength means the adhesive strength before moisture curing after being applied onto the base material. As a means for increasing the initial adhesive strength, a method in which a thermoplastic resin is mixed with a hot-melt adhesive to improve the initial adhesive strength is known. Further, it is known that in a case where a thermoplastic resin is blended in order to increase the initial strength, the open time is shortened. The open time means a working time required for the adhesive to cool and solidify after being applied onto the base material.
Patent Document 1 discloses a urethane hot-melt adhesive composition in which an acrylic resin powder having high solubility in a polyalkylene glycol is used. Further, Patent Document 2 discloses a urethane hot-melt adhesive composition having a relatively long open time by using an acrylic resin powder containing an acrylic polymer having a relatively low glass transition temperature. However, in the market, it is desired to develop an acrylic resin for a urethane hot-melt adhesive that can achieve both a high initial strength and a long open time for the purpose of shortening the process.

[Citation List]

[Patent Documents]

[Patent Document 1]
PCT International Publication No. WO2018/012234

[Patent Document 2]
PCT International Publication No. WO2019/188930

[Summary of Invention]

[Technical Problem]

The present invention has been made to solve such problems. That is, an object of the present invention is to provide an acrylic resin powder suitable for a hot-melt adhesive that exhibits a high initial adhesive strength and has a long open time as compared with those in the related art.

[Solution to Problem]

The present invention includes any of the following aspects [1] to [33].

[1] Acrylic resin powder containing:

> a multistage polymer (G) of a polymer (A) that contains an alkyl (meth)acrylate ester (ma) monomer unit and a polymer (B) containing a methyl methacrylate monomer unit and an alkyl (meth)acrylate ester (mb) monomer unit, in which a glass transition temperature of the multistage polymer (G) is 50°C or higher, and a softening temperature that is measured by a flow tester temperature-rising method is 150°C to 200°C.

[2] The acrylic resin powder according to [1], in which an alkyl group in the alkyl (meth)acrylate ester (ma) has 4 to 8 carbon atoms, and an alkyl group in the methyl methacrylate and the alkyl (meth)acrylate ester (mb) have 4 to 8 carbon atoms.

[3] An acrylic resin powder containing:

> a multistage polymer (G obtained by polymerizing a monomer mixture (b) containing methyl methacrylate and an alkyl (meth)acrylate ester (mb) in the presence of a dispersion liquid that contains a polymer (A) obtained by polymerizing a monomer mixture (a) containing an alkyl (meth)acrylate ester (ma),
> in which an alkyl group in the alkyl (meth)acrylate ester (ma) has 4 to 8 carbon atoms,
> an alkyl group in the alkyl (meth)acrylate ester (mb) has 4 to 8 carbon atoms,
> a glass transition temperature of the multistage polymer (G) is 50°C or higher,
> a mass average molecular weight of the multistage polymer (G) is 10,000 or more and 300,000 or less,
> a softening temperature that is measured by a flow tester temperature-rising method is 150°C to 200°C, and
> the acrylic resin powder is soluble in acetone.

[4] The acrylic resin powder according to any one of [1] to [3], in which a volume average particle diameter of primary particle is 0.1 to 10 $\mu$m.

[5] The acrylic resin powder according to any one of [1] to [4], in which a volume average particle diameter of secondary particles is 20 to 100 $\mu$m.

[6] The acrylic resin powder according to [3], in which the monomer mixture (a) further contains another copolymerizable monomer, and in the monomer mixture (a), a content of the methyl methacrylate is 0% to 60% by mass, a content of the alkyl (meth)acrylate ester (ma) is 40% to 100% by mass, and a content of the other copolymerizable monomer is 0% to 10% by mass with respect to a total mass of the monomer mixture (a).

[7] The acrylic resin powder according to any one of [1] to [6], in which a solubility parameter (SPA) of the polymer (A) is 19.50 $(J/cm^3)^{1/2}$ or more and 20.1 $(J/cm^3)^{1/2}$ or less.

[8] The acrylic resin powder according to [3], in which the monomer mixture (b) further contains another copolymerizable monomer, and in the monomer mixture (b), a content of the methyl methacrylate is 50% to 90% by mass, a content of the alkyl (meth)acrylate ester (mb) is 10% to 50% by mass, and a content of the other copolymerizable monomer is 0% to 10% by mass with respect to a total mass of the monomer mixture (b).

[9] The acrylic resin powder according to any one of [1] to [8], in which a content of a monomer unit derived from the polymer (A) is 10% to 80% by mass with respect to a total mass of monomer units constituting the multistage polymer (G).

[10] The acrylic resin powder according to any one of [1] to [9], in which the glass transition temperature of the multistage polymer (G) is preferably 50°C to 85°C, more preferably 58°C to 80°C, and still more preferably 65°C to 75°C.

[11] The acrylic resin powder according to any one of [1] to [10], in which a glass transition temperature of the polymer (B) is preferably 55°C to 100°C, more preferably 65°C to 95°C, and still more preferably 70°C to 97°C.

[12] The acrylic resin powder according to any one of [1] to [11], in which a solubility parameter (SPA) of the polymer (A) is preferably 19.50 $(J/cm^3)^{1/2}$ or more and 20.1 $(J/cm^3)^{1/2}$ or less, more preferably 19.50 $(J/cm^3)^{1/2}$ or more and 20.0 $(J/cm^3)^{1/2}$ or less, and still more preferably 19.60 $(J/cm^3)^{1/2}$ or more and 20.0 $(J/cm^3)^{1/2}$ or less.

[13] The acrylic resin powder according to any one of [1] to [12], in which the softening temperature of the multistage polymer (G) is preferably 150°C to 200°C, more preferably 155°C to 190°C, and still more preferably 155°C to 185°C.

[14] The acrylic resin powder according to any one of [1] to [13], in which in a case where acetone solubility is evaluated by a method disclosed in the present specification, an acetone insoluble matter is 1% by mass or less.

[15] The acrylic resin powder according to any one of [1] to [14], in which a content of an alkyl (meth)acrylate ester (ma) in a monomer mixture (a) is preferably 40% to 100% by mass, more preferably 45% to 100% by mass, and still more preferably 50% to 100% by mass with respect to a total mass of the monomer mixture (a).

[16] The acrylic resin powder according to any one of [3] to [15], in which a content of the methyl methacrylate in the monomer mixture (b) is preferably 50% to 90% by mass, more preferably 55% to 90% by mass, and still more preferably 65% to 90% by mass with respect to a total mass of the monomer mixture (b).

[17] The acrylic resin powder according to any one of [3] to [16], in which a content of the alkyl (meth)acrylate ester (mb) in the monomer mixture (b) is preferably 10% to 50% by mass, more preferably 10% to 45% by mass, and still more preferably 10% to 35% by mass with respect to a total mass of the monomer mixture (b).

[18] The acrylic resin powder according to any one of [1] to [17], in which when a monomer unit constituting the multistage polymer (G) is set to 100% by mass, a content of a monomer unit derived from the polymer (A) is preferably 10% to 80% by mass and more preferably 20% to 70% by mass.

[19] The acrylic resin powder according to any one of [1] to [18], in which a volume average particle diameter of primary particles is preferably 0.1 to 10 $\mu$m, more preferably 0.1 to 5 $\mu$m, and still more preferably 0.1 to 2 $\mu$m.

[20] The acrylic resin powder according to any one of [1] to [19], in which a volume average particle diameter of secondary particles is preferably 20 to 100 $\mu$m and more preferably 20 to 80 $\mu$m.

[21] The acrylic resin powder according to any one of [1] to [20],

in which in a case where the acrylic resin powder is dissolved in a polyalkylene glycol to obtain a resin composition and a hot-melt adhesive containing the resin composition is prepared, an initial adhesive strength x (kPa) and an open time y (minutes), which are measured according to the following conditions, preferably satisfy the following Relational Expressions (3) and (4),

$$y > -0.325x + 124 \ ... \ (\text{Expression (3)})$$

$$y > 10 \ ... \ (\text{Expression (4)})$$

the initial adhesive strength x is preferably 200 kPa or more, more preferably 300 kPa or more, and still more preferably 400 kPa or more,

in Expression (3), it is preferable to satisfy y > -0.325x + 130, more preferable to satisfy y > -0.325x + 140, and still more preferable to satisfy y > -0.325x + 150, and

in Expression (4), it is preferable to satisfy 60 > y > 10, more preferable to satisfy 40 > y > 10, and still more preferable to satisfy 20 > y > 10.

[22] A resin composition that is obtained by dissolving the acrylic resin powder according to any one of [1] to [21] in a polyalkylene glycol.

[23] The resin composition according to [22], in which the polyalkylene glycol has a number average molecular weight of 200 to 5,000.

[24] The resin composition according to [22] or [23], further including a polyester polyol.

[25] The resin composition according to any one of [22] to [24], further including an isocyanate.

[26] A hot-melt adhesive that is formed from the resin composition according to any one of [22] to [25].

[27] A hot-melt adhesive that is formed from a resin composition including an acrylic resin powder, a polyalkylene glycol, a polyester polyol, and an isocyanate,

in which an initial adhesive strength x (kPa) measured under the following conditions and an open time y (minutes) measured under the following conditions satisfy the following Relational Expressions (3) and (4),

$$y > -0.325x + 124 \ ... \ (\text{Expression (3)})$$

$$y > 10 \ ... \ (\text{Expression (4)})$$

(the initial adhesive strength x),

two flat bars made of wood, having a width of 1.7 cm, a length of 7.5 cm, and a thickness of 1.5 mm are prepared, an area of 1.5 cm $\times$ 1.7 cm of one bar is coated with a hot-melt adhesive which has been heat-melted at 120°C, the other wooden flat bar is overlapped with the one bar and sandwiched with a double sided clip and allowed to stand for 5 minutes to cool and solidify the hot-melt adhesive,

after being allowed to stand, the double sided clip is removed, and a tensile shearing test is carried out with the following tension tester and under the following measurement conditions to measure the initial adhesive strength x,

the tension tester: a precision universal tester (product name: AGS-X, manufactured by Shimadzu Corporation) the measurement conditions: a tension rate of 5.0 mm/min and

a distance between chucks: 50mm
(the open time y),
a dried flat bar made of wood, having a width of 1.7 cm, a length of 7.5 cm, and a thickness of 1.5 mm is coated with a heat-melted hot-melt adhesive and heated to 120°C in a gear oven,
subsequently a cycle of attaching, using finger pressure, and rapidly peeling off a piece of Kraft paper is repeated at intervals of 1 minute at room temperature, and
the open time y is defined as a time taken from when the flat bar is coated with the hot-melt adhesive to when no paper fiber remains on a surface of the adhesive when the piece of Kraft paper is peeled off.

[28] A production method for an acrylic resin powder, including:

a step (I) of carrying out polymerization by dropwise adding a monomer mixture (b) containing methyl methacrylate and an alkyl (meth)acrylate ester (mb) and a chain transfer agent of which an amount is 0.1 to 3 parts by mass with respect to 100 parts by mass of the monomer mixture (b), to a dispersion liquid (A1) that contains a polymer (A) obtained by carrying out polymerization of a monomer mixture (a) containing an alkyl (meth)acrylate ester (ma) with a chain transfer agent of which an amount is 0.1 to 3 parts by mass with respect to 100 parts by mass of the monomer mixture (a), to obtain a dispersion liquid (G1) containing a multistage polymer (G); and
a step (II) of spray-drying the dispersion liquid (G1) of the multistage polymer (G) to obtain an acrylic resin powder, in which an alkyl group in the alkyl (meth)acrylate ester (ma) has 4 to 8 carbon atoms,
an alkyl group in the alkyl (meth)acrylate ester (mb) has 4 to 8 carbon atoms,
a softening temperature that is measured by a flow tester temperature-rising method is 150°C to 200°C.

[29] The production method for an acrylic resin powder according to [28], in which the monomer mixture (a) further contains another copolymerizable monomer, and in the monomer mixture (a), a content of the methyl methacrylate is 0% to 60% by mass, a content of the alkyl (meth)acrylate ester (ma) is 40% to 100% by mass, and a content of the other copolymerizable monomer is 0% to 10% by mass with respect to a total mass of the monomer mixture (a).
[30] The production method for an acrylic resin powder according to [28] or [29], in which the monomer mixture (b) further contains another copolymerizable monomer, and in the monomer mixture (b), a content of the methyl methacrylate is 50% to 90% by mass, a content of the alkyl (meth)acrylate ester (mb) is 10% to 50% by mass, and a content of the other copolymerizable monomer is 0% to 10% by mass with respect to a total mass of the monomer mixture (b).
[31] The production method for an acrylic resin powder according to any one of [28] to [30], in which a content of a monomer unit derived from the polymer (A) is 10% to 80% by mass with respect to a total mass of monomer units constituting the multistage polymer (G).
[32] A production method for a resin composition, including a step (III) of dissolving the acrylic resin powder obtained by the production method according to any one of [28] to [31] in a polyalkylene glycol.
[33] A production method for a hot-melt adhesive, including a step (III) of dissolving the acrylic resin powder obtained by the production method according to any one of [28] to [31] in a polyalkylene glycol and a polyester polyol to obtain a resin composition; and a step (IV) of mixing the resin composition with an isocyanate to obtain a urethane prepolymer.

[Advantageous Effects of Invention]

The acrylic resin powder of the present invention can provide an acrylic resin powder suitable for a hot-melt adhesive that exhibits a high initial adhesive strength and has a long open time as compared with those in the related art.

[Brief Description of Drawings]

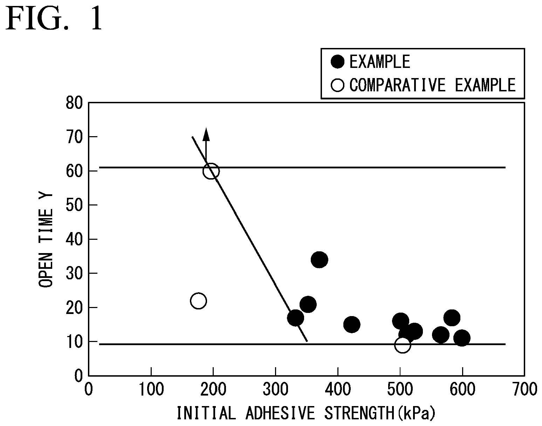

Fig. 1 is a graph showing a correlation between the initial adhesive strength and the open time in Examples and Comparative Examples.

[Description of Embodiments]

Hereinafter, the present invention will be described in detail.

«Acrylic resin powder»

An acrylic resin powder of the present invention is an acrylic resin powder containing a multistage polymer (G) of a polymer (A) that contains an alkyl (meth)acrylate ester (ma) monomer unit and a polymer (B) containing a methyl methacrylate monomer unit and an alkyl (meth)acrylate ester (mb) monomer unit, in which a glass transition temperature of the multistage polymer (G) is 50°C or higher, and a softening temperature that is measured by a flow tester temperature-rising method is 150°C to 200°C.

An alkyl group in the alkyl (meth)acrylate ester (ma) preferably has 4 to 8 carbon atoms, and the alkyl group in the methyl methacrylate and the alkyl (meth)acrylate ester (mb) preferably have 4 to 8 carbon atoms.

An acrylic resin powder of the present invention is an acrylic resin powder containing a multistage polymer (G) obtained by polymerizing a monomer mixture (b) containing methyl methacrylate and an alkyl (meth)acrylate ester (mb) in a presence of a dispersion liquid that contains a polymer (A) obtained by polymerizing a monomer mixture (a) containing an alkyl (meth)acrylate ester (ma), in which an alkyl group in the alkyl (meth)acrylate ester (ma) has 4 to 8 carbon atoms, an alkyl group in the alkyl (meth)acrylate ester (mb) has 4 to 8 carbon atoms, a glass transition temperature of the multistage polymer (G) is 50°C or higher, a mass average molecular weight is 10,000 or more and 300,000 or less, a softening temperature that is measured by a flow tester temperature-rising method is 150°C to 200°C, and the acrylic resin powder is soluble in acetone.

In the present specification, the "multistage polymer" means a resin mixture containing the polymer (A) and the polymer (B), which is obtained by synthesizing the polymer (B) in the presence of the polymer (A). For example, the multistage polymer may have a core-shell structure in which the polymer (A) forms a core portion and the polymer (B) forms a shell portion.

Here, the glass transition temperature (hereinafter also referred to as "Tg") is a value obtained from the FOX Expression (Expression (1)) as described below. In the present specification, the unit of Tg is "°C". Specifically, when a polymer is composed of only a single monomer (homopolymer), the standard analysis values described in "Polymer Data Handbook" edited by the Society of Polymer Science, Japan, or the like can be employed. In a case of a copolymer obtained by polymerizing n kinds of monomers, a value calculated from the Tg of a homopolymer of each monomer can be regarded as the glass transition temperature.

$$1/(273 + \mathrm{Tg}) = \Sigma(W_n/(273 + \mathrm{Tg_n})) \cdots (\text{Expression (1)})$$

In the expression, $W_n$ represents the mass fraction of the monomer n, and $\mathrm{Tg_n}$ represents the glass transition temperature (°C) of the homopolymer of the monomer n. Here, the mass fraction is the proportion of the charge amount of the monomer n to the total charge amount of all the monomers.

The SPA, that is, the solubility parameter (the SP value) of the polymer (A) is a value obtained by substituting the Sp value (Sp (ui)) of the n pieces of a monomer unit i (i = 1 to n) constituting the polymer (A) into Expression (2) below. Sp (ui) can be determined according to the Fedors's method described in Polymer Engineering and Science, Vol. 14,147 (1974).

$$SPA = \sum_{i=1}^{n} \left( Mi \times Sp\left(ui\right) \right) \qquad \cdots (2)$$

(In Expression (2), Mi indicates the mole fraction of the monomer unit i component, and $\Sigma Mi = 1$ is satisfied.)

Table 1 below shows the document values of Tg and the Sp values (Sp (ui)) of representative homopolymers.

[Table 1]

|  | Tg [°C] | Sp (ui) [(J/cm$^3$)$^{1/2}$] |
|---|---|---|
| MMA | 105 | 20.32 |
| nBMA | 20 | 19.32 |
| iBMA | 48 | 18.95 |
| tBMA | 108 | 18.56 |
| nBA | -45 | 19.98 |

(continued)

|  | Tg [°C] | Sp (ui) [(J/cm$^3$)$^{1/2}$] |
|---|---|---|
| MAA | 185 | 25.64 |
| HEMA | 55 | 27.55 |

Abbreviations in the table indicate the following monomers.

- "MMA": Methyl methacrylate
- "n-BMA": n-butyl methacrylate
- "i-BMA": i-butyl methacrylate
- "t-BMA": t-butyl methacrylate
- "n-BA": n-butyl acrylate
- "MAA": Methacrylic acid
- "2-HEMA": 2-hydroxyethyl methacrylate

The glass transition temperature of the multistage polymer (G) of the present invention is 50°C or higher, preferably 58°C or higher, and more preferably 65°C or higher. In a case where the Tg of the multistage polymer (G) is 50°C or higher, the initial strength of the hot-melt adhesive is improved. Specifically, the glass transition temperature of the multistage polymer (G) is preferably 50°C to 85°C, more preferably 58°C to 80°C, and still more preferably 65°C to 75°C. The Tg of the polymer (B) obtained by polymerizing the acrylic monomer mixture (b) is 55°C or higher, preferably 65°C or higher, and more preferably 70°C or higher. In a case where the Tg of the polymer (B) is 55°C or higher, the initial adhesive strength of the hot-melt adhesive is improved, and further, blocking due to the heat fusion between the acrylic resin powders can be suppressed. Specifically, the Tg of the polymer (B) is preferably 55°C to 100°C, more preferably 65°C to 95°C, and still more preferably 70°C to 97°C.

In addition, in the polymer (A) that is obtained by polymerizing the acrylic monomer mixture (a) of the present invention, the solubility parameter (SPA) of the polymer (A) is preferably 19.50 (J/cm$^3$)$^{1/2}$ or more and 20.1 (J/cm$^3$)$^{1/2}$ or less, more preferably 19.50 (J/cm$^3$)$^{1/2}$ or more and 20.0 (J/cm$^3$)$^{1/2}$ or less, and still more preferably 19.60 (J/cm$^3$)$^{1/2}$ or more and 20.0 (J/cm$^3$)$^{1/2}$ or less. In a case where a polymer having SPA is in this range is used, the solubility in the polyalkylene glycol is improved, the open time of the hot-melt adhesive is long, and the workability is improved.

Here, the softening temperature can be measured according to the flow tester temperature-rising method. The setting conditions of the flow tester include the shape of the nozzle, the load, the temperature rising rate, and the like. In the present invention, the softening temperature is measured by using a flow tester CFT-100 manufactured by Shimadzu Corporation. In a case where it is measured with a nozzle of 1 mm$\varphi$ × 10 mm under a load of 294 N (30 kgf) and at a temperature rising rate of the constant rate, the temperature rising rate being 3°C/min, a temperature at which 1/2 of 1.0 g of the sample flows out shall be defined as the softening temperature. The softening temperature of the multistage polymer (G) is preferably 150°C to 200°C, more preferably 155°C to 190°C, and still more preferably 155°C to 185°C. In a case where the softening temperature is 150°C or higher, the initial adhesive strength of the hot-melt adhesive is high, and in a case where the softening temperature is 185°C or lower, the open time of the hot-melt adhesive is long and the workability is excellent. In a case where an acrylic resin having a softening temperature of 200°C or higher is used, the open time becomes short and handling becomes difficult. This softening temperature can be adjusted by appropriately setting the Tg of the multistage polymer (G), the mass average molecular weight thereof, and the content of the monomer unit derived from the polymer (A).

In addition, it is required that the acrylic resin powder that can be used in the present invention is soluble in acetone. The "acrylic resin powder is soluble in acetone" can be determined according to the following method.

1.0 g of an acrylic resin powder is precisely weighed [W$_0$] in a 50 ml sample bottle, 40 ml of acetone is added thereto, and the resulting mixture is dispersed over 1 day. Then, using a centrifuge (high-speed cooling centrifuge, product name: CR22N/CR21N, manufactured by Hitachi Koki Co., Ltd.), centrifugation is carried out at a rotation speed of 12,000 rpm for 60 minutes at a temperature of 2°C. Then, insoluble matter is separated from the soluble matter, acetone is added again to the insoluble matter to disperse the insoluble matter, and centrifugation is carried out in the same manner to completely separate the soluble matter and the insoluble matter. The insoluble matter after centrifugation is heated to 60°C in an oven under a nitrogen atmosphere to remove acetone, vacuum dried at 60°C, the remaining insoluble matter is weighed [W$_1$], and the resultant amount is denoted by the proportion of acetone insoluble matter, that is, the gel fraction. The gel fraction is calculated by the following expression.

$$\text{Gel fraction (\% by mass)} = [W_1]/[W_0] \times 100$$

[W₁]; Amount of acetone insoluble matter (g)

[W₀]; Amount of acrylic resin powder precisely weighed in a 50 ml sample bottle (g)

In a case where the gel fraction is 1% by mass or less, an acrylic resin powder is determined to be soluble in acetone.

(Copolymer composition)

In the alkyl (meth)acrylate ester (ma) and the alkyl (meth)acrylate ester (mb), which can be contained when the acrylic resin powder of the present invention is produced, the alkyl group has 4 to 8 carbon atoms. Examples of the monomeric alkyl (meth)acrylate ester include (meth)acrylic acid esters (for example, n-butyl (meth)acrylate, s-butyl (meth)acrylate, i-butyl (meth)acrylate, t-butyl (meth)acrylate, hexyl (meth)acrylate, cyclohexyl (meth)acrylate, and 2-ethylhexyl (meth)acrylate. Among them, in the alkyl (meth)acrylate ester (ma), the alkyl group is preferably a primary alkyl group and more preferably a linear primary alkyl group. Further, in the alkyl (meth)acrylate ester (mb), the alkyl group is preferably a primary alkyl group and more preferably a primary alkyl group having a branched chain. It is noted that "(meth)acrylate" is a general term for acrylate acid and methacrylate. The alkyl group may have or may not have a substituent. Examples of the substituent include a hydroxy group and a halogen atom, where it is preferable that an alkylamino group and a carbonyl group are not included.

Examples of the monomer other than the alkyl (meth)acrylate ester (ma) and the alkyl (meth)acrylate ester (mb) include: (meth)acrylic acid esters having an alkyl chain having 1 to 3 carbon atoms (for example, methyl (meth)acrylate, ethyl (meth)acrylate, and propyl (meth)acrylate); (meth)acrylic acid esters having a long alkyl chain having 9 or more carbon atoms (for example, stearyl (meth)acrylate); carboxyl group-containing monomers such as (meth)acrylic acid, itaconic acid, crotonic acid, maleic acid, fumaric acid, 2-succinoloyloxyethyl methacrylate, and 2-hexahydrophthaloyloxyethyl methacrylate; further, hydroxyl group-containing (meth)acrylic acid esters such as 2-hydroxyethyl (meth)acrylate, 2-hydroxypropyl (meth)acrylate; further, carbonyl group-containing (meth)acrylic acid esters such as acetoacetoxyethyl (meth)acrylate; and amino group-containing (meth)acrylic acid esters such as N-dimethylaminoethyl (meth)acrylate and N-diethylaminoethyl (meth)acrylate.

In the monomer mixture (a), the content of the methyl methacrylate is preferably 0% to 60% by mass, the content of the alkyl (meth)acrylate ester (ma) is preferably 40% to 100% by mass, and the content of the other copolymerizable monomer is preferably 0% to 10% by mass with respect to the total mass of the monomer mixture (a).

In a case where it is within the above range, the Tg and the SPA of the polymer (A) are easily controlled, and thus a hot-melt adhesive having a long open time can be obtained.

The content of the alkyl (meth)acrylate ester (ma) in the monomer mixture (a) is preferably 40% to 100% by mass, more preferably 45% to 100% by mass, and still more preferably 50% to 100% by mass, with respect to the total mass of the monomer mixture (a).

In the monomer mixture (a), the content of the other copolymerizable monomer is preferably 0% to 10% by mass with respect to the total mass of the monomer mixture (a).

It is noted that the total content of the methyl methacrylate, the alkyl (meth)acrylate ester (ma), and the other copolymerizable monomers does not exceed 100% by mass with respect to the total mass of the monomer mixture (a).

In the monomer mixture (b), the content of the methyl methacrylate is preferably 50% to 90% by mass, the content of the alkyl (meth)acrylate ester (mb) is preferably 10% to 50% by mass, and the content of the other copolymerizable monomer is preferably 0% to 10% by mass with respect to the total mass of the monomer mixture (b).

In the monomer mixture (b), the content of the other copolymerizable monomer is preferably 0% to 10% by mass with respect to the total mass of the monomer mixture (b).

It is noted that the total content of the methyl methacrylate, the alkyl (meth)acrylate ester (mb), and the other copolymerizable monomers does not exceed 100% by mass with respect to the total mass of the monomer mixture (b).

In addition, in the monomer mixture (b), the content of the methyl methacrylate is more preferably 55% to 90% by mass, the content of the alkyl (meth)acrylate ester (mb) is more preferably 10% to 45% by mass, and the content of the other copolymerizable monomer is more preferably 0% to 10% by mass with respect to the total mass of the monomer mixture (b).

Further, in the monomer mixture (b), the content of the methyl methacrylate is more preferably 65% to 90% by mass, the content of the alkyl (meth)acrylate ester (mb) is more preferably 10% to 35% by mass, and the content of the other copolymerizable monomer is more preferably 0% to 10% by mass with respect to the total mass of the monomer mixture (b).

In a case where it is within the above range, the polymer (B) easily has a glass transition temperature of 55°C or higher, the initial adhesive strength of the hot-melt adhesive is improved, and further, blocking due to the heat fusion between the acrylic resin powders can be suppressed.

When the amount of monomer units constituting the multistage polymer (G) is set to 100% by mass, the content of the monomer unit derived from the polymer (A) is preferably 10% to 80% by mass and more preferably 20% to 70% by mass. In a case where the content of the monomer unit derived from the polymer (A) is 10% by mass or more, the hot-melt adhesive has a long open time. In a case where the content of the monomer unit derived from the polymer (A) is 80% by mass or less, the initial adhesive strength is improved, and further, blocking due to the heat fusion between the acrylic resin powders can be suppressed. The content of the monomer unit derived from the polymer (B) is preferably 20% to 90% by mass and more preferably 30% to 80% by mass.

The acrylic resin powder of the present invention includes the multistage polymer (G) that is obtained by polymerizing the monomer mixture (b) in the presence of a dispersion liquid of the polymer (A) obtained by polymerizing the monomer mixture (a). In this case, it is also possible to obtain a multistage polymer which is polymerized by adding another monomer mixture after the polymerization of the monomer mixture (a) or after the polymerization of the monomer mixture (b), and the obtained multistage polymer can be used as the multistage polymer (G) as long as the functions of the polymer (A) and the polymer (B) are not impaired.

In addition, prior to the polymerization of the monomer mixture (a), another monomer mixture (s) may be polymerized as long as the functions of the polymer (A) and the polymer (B) are not impaired. Specifically, the polymer (A) is obtained by polymerizing the monomer mixture (a) in the presence of a dispersion liquid (S) of a polymer obtained by polymerizing a monomer mixture (s). The main component of the other monomer mixture (s) is preferably a (meth)acrylic acid ester obtained by esterification of an alcohol having 1 to 4 carbon atoms and a (meth)acrylic acid since hydrophilicity and hydrophobicity are properly balanced. Further, the using amount (charge amount) of the other monomer mixture (s) is preferably 0% to 10% by mass with respect to the using amount of all the monomers used for the synthesis of the multistage polymer (G). However, the total using amount of the monomer mixture (a), the monomer mixture (b), and the monomer mixture (s), which are used in the synthesis of the multistage polymer (G), does not exceed 100% by mass.

(Mass average molecular weight)

The mass average molecular weight of the multistage polymer (G) that can be used in the present invention is a converted value with respect to a standard polystyrene, which can be determined by the gel permeation chromatography (GPC) method. The mass average molecular weight of the multistage polymer (G) included in the acrylic resin powder of the present invention is 10,000 or more and 300,000 or less.

The mass average molecular weight of the multistage polymer (G) is preferably 20,000 or more and 200,000 or less. In a case where the mass average molecular weight of the multistage polymer (G) is 10,000 or more, the initial adhesive strength of the adhesive tends to be favorable. In a case where the mass average molecular weight of the multistage polymer (G) is 300,000 or less, the viscosities of the resin composition and the adhesive are suppressed, and further, the hot-melt adhesive has a long open time.

(Volume average particle diameter (primary particle diameter) of primary particles)

The volume average particle diameter (the primary particle diameter) of primary particles of an acrylic resin powder that can be used in the present invention is preferably 0.1 to 10 $\mu$m, more preferably 0.1 to 5 $\mu$m, and still more preferably 0.1 to 2 $\mu$m.

Here, the primary particle refers to a polymer particle which has the minimum units constituting the acrylic resin powder. In a case where the volume average particle diameter of the primary particles is 10 $\mu$m or less, the surface area of the particles is large and the solubility in a medium such as a polyalkylene glycol is favorable. Further, when the volume average particle diameter is 0.1 $\mu$m or more, the heat fusion of the secondary particles as powders is suppressed, and the dispersibility in a medium such as a polyalkylene glycol is favorable.

In the present invention, the volume average particle diameter of the primary particles is an averaged value of the particle diameters of the multistage polymer (G) in the dispersion liquid., measured by using a laser diffraction/scattering particle diameter distribution measuring apparatus (manufactured by Horiba, Ltd., product name: LA-960).

(Volume average particle diameter of secondary particles)

The volume average particle diameter of secondary particles of an acrylic resin powder that can be used in the present invention is preferably 20 to 100 $\mu$m and more preferably 20 to 80 $\mu$m.

The secondary particle refers to an aggregated particle obtained by aggregating a large number of primary particles. In a case where the volume average particle diameter is 20 $\mu$m or more, the blowing of powder is suppressed and handling is improved. In a case where the volume average particle diameter is 100 $\mu$m or less, the solubility in a polyalkylene glycol is favorable.

In the present invention, the volume average particle diameter of the secondary particles of the acrylic resin powder is an averaged value of the particle diameters of the acrylic resin powder, measured by using a laser diffraction/scattering particle diameter distribution measuring apparatus (manufactured by Horiba, Ltd., product name: LA-960).

(Components included in acrylic resin powder)

An acrylic resin powder that can be used in the present invention may include an additive such as an antifoaming agent, as necessary.

In the acrylic resin powder of the present invention, in a case where the acrylic resin powder of the present invention is dissolved in a polyalkylene glycol to obtain a resin composition and a hot-melt adhesive containing the resin composition is prepared, an initial adhesive strength x (kPa) and an open time y (minutes), which are measured according to the following conditions, preferably satisfy the following Relational Expressions (3) and (4).

$$y > -0.325x + 124 \ldots \text{(Expression (3))}$$

$$y > 10 \ldots \text{(Expression (4))}$$

It is possible to provide an acrylic resin powder suitable for a hot-melt adhesive that exhibits a high initial adhesive strength in the above range of Expression (3) and has a long open time. In addition, the initial adhesive strength x is preferably 200 kPa or more, more preferably 300 kPa or more, and still more preferably 400 kPa or more.

In Expression (3), it is preferable to satisfy $y > -0.325x + 130$, more preferable to satisfy $y > -0.325x + 140$, and still more preferable to satisfy $y > -0.325x + 150$.

Regarding Expression (4), the open time y is preferably longer than 10 minutes since the working time can be secured, and the open time y is preferably set to be less than 60 minutes since the process time can be shortened.

In Expression (4), $60 > y > 10$ is preferable, $40 > y > 10$ is more preferable, and $20 > y > 10$ is still more preferable.

(Initial adhesive strength x)

Two flat bars made of wood, having a width of 1.7 cm, a length of 7.5 cm, and a thickness of 1.5 mm are prepared, an area of 1.5 cm $\times$ 1.7 cm of one bar is coated with a hot-melt adhesive which has been heat-melted at 120°C, the other wooden flat bar is overlapped with the one bar and sandwiched with a double sided clip and allowed to stand for 5 minutes to cool and solidify the hot-melt adhesive,

after being allowed to stand, the double sided clip is removed, and a tensile shearing test is carried out with the following tension tester and under the following measurement conditions to measure the initial adhesive strength x, the tension tester: a precision universal tester (product name: AGS-X, manufactured by Shimadzu Corporation) the measurement conditions: a tension rate of 5.0 mm/min and a distance between chucks: 50mm (the open time y), a dried flat bar made of wood, having a width of 1.7 cm, a length of 7.5 cm, and a thickness of 1.5 mm is coated with a heat-melted hot-melt adhesive and heated to 120°C in a gear oven, subsequently a cycle of attaching, using finger pressure, and rapidly peeling off a piece of Kraft paper is repeated at intervals of 1 minute at room temperature, and the open time y is defined as a time taken from when the flat bar is coated with the hot-melt adhesive to when no paper fiber remains on a surface of the adhesive when the piece of Kraft paper is peeled off.

<<Resin composition>>

The resin composition of the present invention is obtained by dissolving the acrylic resin powder of the present invention in a polyalkylene glycol. The resin composition of the present invention can be included in a hot-melt adhesive.

(Polyalkylene glycol)

As the polyalkylene glycol component, polyalkylene glycols having two or more glycol units such as a polymethylene glycol, a polyethylene glycol, a polypropylene glycol, a polyhexamethylene glycol, and a copolymer of ethylene oxide and propylene oxide, and branched polyalkylene glycols using polyfunctional alcohols such as glycerin are mentioned. These may be used alone or in a combination of two or more thereof.

The number average molecular weight of the polyalkylene glycol is preferably 200 to 5,000 and more preferably 400 to 3,000. In a case where the number average molecular weight of the polyalkylene glycol is 200 or more, the adhesive strength of the hot-melt adhesive after curing is favorable. In a case where the number average molecular weight of the polyalkylene glycol is 5,000 or less, the viscosity of the resin composition is low and the coatability is favorable.

In the present specification, the number average molecular weight can be measured by a gel permeation chromatography (GPC) method.

In the resin composition of the present invention, in a case where a hot-melt adhesive containing the resin composition of the present invention is prepared, an initial adhesive strength x (kPa) and an open time y (minutes), which are measured according to the following conditions, preferably satisfy the following Relational Expressions (3) and (4).

$$y > -0.325x + 124 \dots \text{(Expression (3))}$$

$$y > 10 \dots \text{(Expression (4))}$$

It is possible to provide an acrylic resin powder suitable for a hot-melt adhesive that exhibits a high initial adhesive strength in the above range of Expression (3) and has a long open time. In addition, the initial adhesive strength x is preferably 200 kPa or more, more preferably 300 kPa or more, and still more preferably 400 kPa or more.

In Expression (3), it is preferable to satisfy $y > -0.325x + 130$, more preferable to satisfy $y > -0.325x + 140$, and still more preferable to satisfy $y > -0.325x + 150$.

Regarding Expression (4), the open time y is preferably longer than 10 minutes since the working time can be secured, and the open time y is preferably set to be less than 60 minutes since the process time can be shortened.

In Expression (4), $60 > y > 10$ is preferable, $40 > y > 10$ is more preferable, and $20 > y > 10$ is still more preferable.

(Polyester polyol)

The resin composition of the present invention may further contain a polyester polyol. As the polyester polyol, a crystalline polyester polyol and an amorphous polyester polyol are known, and specific examples of the polyester polyol include an aliphatic polyester polyol and an aromatic polyester polyol. The crystalline polyester polyol and the amorphous polyester polyol are easily distinguished by DSC. The melting point of the crystalline polyester polyol is observed as an endothermic peak when the temperature is raised or observed as an exothermic peak when the temperature is lowered by the DSC measurement.

In a case where the melting point of the amorphous polyester polyol is measured by DSC, an endothermic peak and an exothermic peak are not clearly observed, and thus the amorphous polyester polyol can be distinguished from the crystalline polyester polyol.

The aliphatic polyester polyol can be obtained by reacting an aliphatic dicarboxylic acid with a diol. Examples of the aliphatic dicarboxylic acid include adipic acid, sebacic acid, azelaic acid, and decamethylene dicarboxylic acid. These may be used alone or in a combination of two or more thereof.

Examples of the diol include low molecular weight diols having 2 to 12 carbon atoms, such as ethylene glycol, 1-methylethylene glycol, 1-ethylethylene glycol, propylene glycol, butanediol, pentanediol, hexanediol, heptanediol, octanediol, nonanediol, decanediol, dodecanediol, neopentyl glycol, 2-methyl-1,3-propanediol, cyclohexanedimethanol, and 2,4-dimethyl-1,5-pentanediol. Among them, at least one selected from ethylene glycol, butanediol, hexanediol, octanediol, and decanediol is preferred. These diols may be used alone or in a combination of two or more thereof.

Examples of the aliphatic polyester polyol include polyhexamethylene adipate, polyhexamethylene sebacate, polyhexamethylene dodecanoate, and polybutylene adipate.

The aromatic polyester polyol is preferably a polyol obtained by reacting an aromatic polycarboxylic or dicarboxylic acid with the diol described above. Examples of the aromatic polycarboxylic or dicarboxylic acid include phthalic acid, isophthalic acid, and terephthalic acid. These may be used alone or in a combination of two or more thereof. Examples of the aromatic polyester polyol include a polyalkylene phthalate, a polyalkylene isophthalate, and a polyalkylene terephthalate.

A polyether polyol has a low viscosity and favorable handleability, and thus it is suitable for dissolving an acrylic resin powder. Further, since the polyester polyol has high heat resistance, high solvent resistance, and high strength, it is preferable to use the polyalkylene glycol and the polyester polyol in combination.

(Isocyanate)

The resin composition of the present invention may further contain an isocyanate. Examples of the isocyanate include ethylene diisocyanate, ethylidene diisocyanate, propylene diisocyanate, butylene diisocyanate, hexamethylene diisocyanate, toluene diisocyanate, cyclopentylene-1,3-diisocyanate, cyclohexylene-1,4-diisocyanate, cyclohexylene-1,2-diisocyanate, 4,4'-diphenylmethane diisocyanate, 2,2-diphenylpropane-4,4'-diisocyanate, p-phenylene diisocyanate, m-phenylene diisocyanate, xylylene diisocyanate, 1,4-naphthylene diisocyanate, 1,5-naphthylene diisocyanate, diphenyl-4,4'-diisocyanate, azobenzene-4,4'-diisocyanate, diphenylsulfone-4,4'-diisocyanate, dichlorohexamethylene diisocyanate, furfuridene diisocyanate, 1-chlorobenzene-2,4-diisocyanate, 4,4',4"-triisocyanate-triphenylmethane, 1,3,5-triisocyanate-benzene, 2,4,6-triisocyanate-toluene, and 4,4'-dimethyldiphenylmethane-2,2',5,5'-tetraisocyanate.

The average number of isocyanate groups contained in one molecule of the isocyanate is preferably 1 to 3. A difunctional isocyanate, so-called a diisocyanate is particularly preferable as the isocyanate. The isocyanates may be used alone or in a combination of two or more thereof. Among them, 4,4'-diphenylmethane diisocyanate is preferable from the viewpoint of high adhesive strength after moisture curing.

Although a monool, a monoisocyanate, a trifunctional polyol, or a trifunctional isocyanate can be used, a difunctional polyol (a diol) and a difunctional isocyanate (a diisocyanate) are preferred from the viewpoint of the viscosity of the resin composition.

In addition, it is preferable to use 2 moles of a difunctional isocyanate with respect to 1 mole of a difunctional polyol since the desired urethane prepolymer can be produced relatively easily.

«Hot-melt adhesive»

An adhesive formed from the resin composition of the present invention may be used as the hot-melt adhesive.

The hot-melt adhesive of the present invention is formed from the resin composition of the present invention. In the resin composition, the polyol reacts with the isocyanate to form a urethane polymer. That is, the hot-melt adhesive of the present invention contains a urethane polymer.

The content of the acrylic resin powder is preferably 1% to 50% by mass and more preferably 5% to 30% by mass with respect to the total mass of the hot-melt adhesive.

When the hot-melt adhesive of the present invention contains an acrylic resin powder, a polyol, and an isocyanate, the acrylic resin powder is preferably 1% to 50% by mass and the total amount of the polyol and the isocyanate is preferably 50% to 99% by mass, and further, the acrylic resin powder is more preferably 5% to 30% by mass and the total amount of the polyol and the isocyanate is more preferably 70% to 95% by mass, with respect to 100% by mass of the total amount of the acrylic resin powder, the polyol, and the isocyanate. However, the total amount of the acrylic resin powder, the polyol, and the isocyanate does not exceed 100% by mass.

When the amount of the acrylic resin powder is 1% by mass or more with respect to 100% by mass of the total amount of the acrylic resin powder, the polyol, and the isocyanate, the initial adhesive strength tends to be favorable. In addition, when the content is 50% by mass or less, the adhesive strength after curing tends to be improved.

Other additives can be added as long as the effects of the present invention are not impaired.

The adding amount thereof is preferably 0% to 5% by mass. Examples of other additives to the hot-melt adhesive of the present invention include: plasticizers such as dioctyl phthalate, dibutyl phthalate, and dioctyl adipate; antioxidants such as a phenol-based antioxidant, a phosphite-based antioxidant, a thioether-based antioxidant, and an amine-based antioxidant; pigments such as titanium oxide and carbon black; light stabilizers such as benzotriazole, a hindered amine, benzoate, benzotriazole; flame retardants such as a halogen-based flame retardant, a phosphorus-based flame retardant, an antimony-based flame retardant, and a metal hydroxide-based flame retardants; metal-based catalysts such as tin-based catalysts (trimethyltin laurate, trimethyltin hydroxide, dibutyltin dilaurate, dibutyltin maleate, and the like), lead-based catalysts (lead oleate, lead naphthenate, lead octenoate, and the like), other metal-based catalysts (metal naphthenates such as cobalt naphthenate), amine-based catalysts such as triethylenediamine, tetramethylethylenediamine, tetramethylhexylenediamine, asdiazabicycloalkenes, and dialkylaminoalkylamines, and curing catalysts such as bis(2-dimethylaminoethyl) ether and dimorpholinodiethyl ether; and wax such as paraffin wax and microcrystalline wax. Further, as necessary, a wetting agent, a viscosity improver, an antifoaming agent, a rheology adjusting agent, or the like can be added.

In the hot-melt adhesive of the present invention, the initial adhesive strength x (kPa) and the open time y (minutes), which are measured according to the following conditions, preferably satisfy the following Relational Expressions (3) and (4).

$$y > -0.325x + 124 \ldots \text{(Expression (3))}$$

$$y > 10 \ ... \ (\text{Expression (4)})$$

It is possible to provide an acrylic resin powder suitable for a hot-melt adhesive that exhibits a high initial adhesive strength in the above range of Expression (3) and has a long open time. In addition, the initial adhesive strength x is preferably 200 kPa or more, more preferably 300 kPa or more, and still more preferably 400 kPa or more.

In Expression (3), it is preferable to satisfy y > -0.325x + 130, more preferable to satisfy y > -0.325x + 140, and still more preferable to satisfy y > -0.325x + 150.

Regarding Expression (4), the open time y is preferably longer than 10 minutes since the working time can be secured, and the open time y is preferably set to be less than 60 minutes since the process time can be shortened.

In Expression (4), 60 > y > 10 is preferable, 40 > y > 10 is more preferable, and 20 > y > 10 is still more preferable.

<<Production method for acrylic resin powder>>

A production method for an acrylic resin powder of the present invention uses the polymer (A) that is formed by carrying out polymerization by dropwise adding a chain transfer agent to the monomer mixture (a) containing the alkyl (meth)acrylate ester (ma), where the amount of the chain transfer agent is 0.1 to 3 parts by mass with respect to 100 parts by mass of the monomer mixture (a). For the polymerization of the monomer mixture (a), for example, an emulsion polymerization method, a seed polymerization method, a soap-free polymerization method, a dispersion polymerization method, a fine suspension polymerization method, or the like can be used. The dispersion liquid (G1) containing the multistage polymer (G) is formed by carrying out polymerization by dropwise adding a chain transfer agent to a dispersion liquid of the obtained polymer (A), where the amount of the chain transfer agent is 0.1 to 3 parts by mass with respect to 100 parts by mass of the monomer mixture (b). Here, the monomer mixture (b) contains methyl methacrylate and the alkyl (meth)acrylate ester (mb). Subsequently, the dispersion liquid (G1) that contains the multistage polymer (G) is pulverized by a spray-drying method, an acid coagulation process or salt coagulation process followed by a drying process, a freeze drying method, a centrifugal separation method, or the like and thereby an acrylic resin powder can be obtained. The spray-drying method is particularly preferred since it is possible to disperse homogeneously, as the primary particles, the aggregated particles by disrupting the higher-order structure by relatively weak shearing due to the fact that the primary particles do not firmly bind with each other.

In the production method for an acrylic resin powder of the present invention, the monomer mixture (b) is polymerized in the presence of the dispersion liquid of the polymer (A) obtained by polymerizing the monomer mixture (a), whereby the dispersion liquid (G1) that contains the multistage polymer (G) is formed. In this case, it is also possible to produce the dispersion liquid (G1) containing the multistage polymer (G) by carrying out polymerization by adding another monomer mixture after the polymerization of the monomer mixture (a) or after the polymerization of the monomer mixture (b) as long as the functions of the polymer (A) and the polymer (B) are not impaired.

In addition, prior to the polymerization of the monomer mixture (a), another monomer mixture (s) may be polymerized as long as the functions of the polymer (A) and the polymer (B) are not impaired. The main component of the other monomer mixture (s) is preferably a (meth)acrylic acid ester of an alcohol having 1 to 4 carbon atoms since hydrophilicity and hydrophobicity are properly balanced. Further, it is preferable to use the using amount (charge amount) of the other monomer mixture (s) within a range of 1% to 10% by mass with respect to the using amount of all the monomers used for the synthesis of the multistage polymer (G).

The monomer mixture (a) contains the alkyl (meth)acrylate ester (ma), and the monomer mixture (b) contains methyl methacrylate and the alkyl (meth)acrylate ester (mb). The other copolymerizable monomers may include the same monomers as those described above.

In the monomer mixture (a), the content of the methyl methacrylate in the monomer mixture (b) is preferably 0% to 60% by mass, more preferably 0% to 55% by mass, and still more preferably 0% to 50% by mass with respect to the total mass of the monomer mixture (a).

The content of the alkyl (meth)acrylate ester (ma) in the monomer mixture (a) is preferably 40% to 100% by mass, more preferably 45% to 100% by mass, and still more preferably 50% to 100% by mass, with respect to the total mass of the monomer mixture (a).

In the monomer mixture (a), the content of the other copolymerizable monomer is preferably 0% to 10% by mass with respect to the total mass of the monomer mixture (a).

It is noted that the total content of the methyl methacrylate, the alkyl (meth)acrylate ester (ma), and the other copolymerizable monomers does not exceed 100% by mass with respect to the total mass of the monomer mixture (a).

In the monomer mixture (b), the content of the methyl methacrylate in the monomer mixture (b) is preferably 50% to 90% by mass, more preferably 55% to 90% by mass, and still more preferably 65% to 90% by mass with respect to the total mass of the monomer mixture (b).

In the monomer mixture (b), the content of the alkyl (meth)acrylate ester (mb) in the monomer mixture (b) is preferably 10% to 50% by mass, more preferably 10% to 45% by mass, and still more preferably 10% to 35% by mass with respect to the total mass of the monomer mixture (b).

In the monomer mixture (b), the content of the other copolymerizable monomer is preferably 0% to 10% by mass with respect to the total mass of the monomer mixture (b).

It is noted that the total content of the methyl methacrylate, the alkyl (meth)acrylate ester (mb), and the other copolymerizable monomers does not exceed 100% by mass with respect to the total mass of the monomer mixture (b).

When the amount of monomer units constituting the multistage polymer (G) is set to 100% by mass, the content of the monomer unit derived from the polymer (A) is preferably 10% to 80% by mass and more preferably 20% to 70% by mass.

When the amount of monomer units constituting the multistage polymer (G) is set to 100% by mass, the content of the monomer unit derived from the monomer mixture (b) is preferably 20% to 90% by mass and more preferably 30% to 80% by mass.

However, the content of the monomer unit derived from the polymer (A) and the total content of the monomer units derived from the monomer mixture (b) do not exceed 100% by mass.

(Chain transfer agent)

It is preferable to use a chain transfer agent for adjusting the molecular weight of a polymer to be obtained. Examples of the chain transfer agent include mercaptans such as n-dodecyl mercaptan; thioglycolic acid esters such as octyl thioglycolate; and $\alpha$-methylstyrene dimer and terpinolene. Among them, a primary or secondary mercapto compound is preferable since the physical properties of the hot-melt adhesive using the acrylic resin powder obtained by polymerization are favorable.

Examples of the primary or secondary mercapto compound include alkyl mercaptans such as n-butyl mercaptan, sec-butyl mercaptan, n-octyl mercaptan, n-dodecyl mercaptan, and n-octadecyl mercaptan; thioglycolic acid esters such as 2-ethylhexyl thioglycolate, methoxybutyl thioglycolate, and trimethylolpropane tris(thioglycolate); and mercaptopropionic acid esters such as 2-ethylhexyl $\beta$-mercaptopropionate, 3-methoxybutyl $\beta$-mercaptopropionate, and trimethylolpropane tris ($\beta$-thiopropionate). These may be used alone or in a combination of two or more thereof. Among them, n-octyl mercaptan, n-dodecyl mercaptan, and 2-ethylhexyl thioglycolate, which have a large chain transfer constant, are preferred.

The using amount of the chain transfer agent is preferably within a range of 0.1 to 3 parts by mass, and more preferably within a range of 0.3 to 2 parts by mass, with respect to 100 parts by mass of the monomer mixture (a) or monomer mixture (b). In a case where the using amount of the chain transfer agent used is 0.1 parts by mass or more, the molecular weight of the copolymer is decreased by chain transfer of radicals, and thus the physical properties of the hot-melt adhesive are favorable. Further, in a case where the using amount of the chain transfer agent is 3 parts by mass or less, the amount of the unreacted monomer and the chain transfer agent remaining reduced, and thus the odor reduced.

(Emulsifying agent)

In a case of polymerizing in water, it is desirable to use an emulsifying agent. As the emulsifying agent, an anionic surfactant or a nonionic surfactant can be used. Specific examples of the anionic surfactant include an alkylbenzene sulfonate, an alkyl sulfonate, an alkyl sulfate ester salt, a fatty acid metal salt, a polyoxyalkyl ether sulfate ester salt, a polyoxyethylene carboxylic acid ester sulfate ester salt, and a polyoxyethylene alkylphenyl ether sulfate ester salt, and a succinic acid dialkyl ester sulfonate (for example, sodium dioctyl sulfosuccinate). These may be used alone or in a combination of two or more thereof.

Specific examples of the nonionic surfactant include compounds having a polyoxyethylene chain in the molecule and having surface activating ability, such as polyoxyethylene alkylphenyl ether, a polyoxyethylene alkyl ether, a polyoxyethylene fatty acid ester, a polyoxyethylene sorbitan fatty acid ester, a polyoxyethylene alkyl ether glycerin borate ester, a polyoxyethylene alkyl ether phosphate, and a polyoxyethylene, a compound in which each polyoxyethylene chain of these compounds is replaced by a copolymer of oxyethylene and oxypropylene, a sorbitan fatty acid ester, a fatty acid glycerin ester, a glycerin fatty acid ester, and pentaerythritol fatty acid ester. These may be used alone or in a combination of two or more thereof.

(Polymerization initiator)

In a case of polymerizing in water, it is desirable to use a water-soluble radical polymerization initiator. Examples of the water-soluble radical polymerization initiator include persulfates such as potassium persulfate, ammonium persulfate, and sodium persulfate; water-soluble azo compounds such as 2,2'-azobis(2-amidinopropane) trihydrochloride, 4,4'-azobis(4-cyanopentanoic acid); thermal decomposition-based polymerization initiators such as hydrogen peroxide; and redox-based polymerization initiators such as hydrogen peroxide and ascorbic acid, tert-butyl hydroperoxide and rongalite, potassium persulfate and a metal salt, and ammonium persulfate and sodium hydrogen sulfite. These polymerization initiators may be used alone or in a combination of two or more thereof.

<<Production method for resin composition>>

The production method for a resin composition of the present invention includes a step (III) of dissolving the acrylic resin powder obtained by the above-described production method in a polyalkylene glycol. As a method of dissolution, for example, the acrylic resin powder can be dissolved by being added to a polyalkylene glycol, dispersed, and then heated and mixed.

The heating temperature is not particularly limited as long as it is a temperature at which the acrylic resin powder is dissolved. However, the acrylic resin powder can be dissolved at a low temperature or at a short time as compared with a case of using an acrylic resin powder obtained by suspension polymerization. The acrylic resin powder and the polyester polyol may be simultaneously added and dissolved. After dissolution, it is preferable to add a defoaming agent as necessary and stir while heating under reduced pressure by using a vacuum pump or the like to sufficiently remove water in the resin composition.

As the polyalkylene glycol to be used, the same polyalkylene glycols as those exemplified in the section of the polyalkylene glycol, which may be contained in the resin composition of the present invention, can be used. A polyester polyol may be used together. As the polyester polyol to be used, the same polyester polyols as those exemplified in the section of the polyester polyol, which may be contained in the resin composition of the present invention, can be used.

A urethane prepolymer can be obtained by dissolving the acrylic resin powder obtained by the production method described above in the polyalkylene glycol, and then adding an isocyanate and carrying out heating and mixing. The polyester polyol may be heated and mixed to be dissolved by adding the acrylic resin powder to the polyalkylene glycol, and after the addition of the acrylic resin powder, the polyester polyol and the isocyanate may be added simultaneously and heated and mixed.

Other additives may be included as long as they do not adversely affect the reaction between the polyol forming the urethane prepolymer and the isocyanate. The timing of addition is not particularly limited, but for example, in a case of synthesizing a urethane prepolymer, the other additives may be added together with the polyol and the isocyanate, or the polyol and the isocyanate is reacted in advance to synthesize a urethane prepolymer and then the other additives may be added. As the additive, the same additives as those exemplified as the other additives to the hot-melt adhesive can be used.

The heating temperature is preferably in a range of 80°C to 140°C and more preferably in a range of 90°C to 110°C. Within this heating temperature range, the dissolution of each component is favorable, the viscosity is reduced, and the handleability is improved. Further, the reaction between the isocyanate and the polyalkylene glycol proceeds sufficiently. The heating time is not particularly limited; however, it is preferably within a range of 30 minutes to 300 minutes and more preferably 60 minutes to 180 minutes.

«Use application of resin composition»

The obtained resin composition of the present invention can be applied as a hot-melt adhesive. In the present invention, the "hot-melt adhesive" means an adhesive that is used after being heated at 80°C to 150°C to be melted. The hot-melt adhesive of the present invention can be used in the fields where hot-melt adhesives have been conventionally used, such as the field of building interior (or the field of construction), the field of electronic materials, and the field of automobile interior.

<<Production method for hot-melt adhesive>>

A production method for a hot-melt adhesive includes a step (III) of dissolving the acrylic resin powder obtained by the above-described production method in a polyalkylene glycol to obtain a resin composition; and a step (IV) of mixing the resin composition with an isocyanate to obtain a urethane prepolymer.

In the step (III), the same conditions as those described in <<Production method for resin composition>> can be employed.

In the step (IV), a curing catalyst may be further mixed. Examples of the curing catalyst include 2,2'-dimorpholinodiethyl ether.

The use application of the hot-melt adhesive, which is not particularly limited, is suitable for attaching an automobile interior member and for attaching a decorative material to a building interior member, and the hot-melt adhesive can be also used for woodworking, paper processing, fiber processing, a general purpose, or the like.

The hot-melt adhesive of the present invention can be used in the same manner as the method for the conventional hot-melt adhesive, and the usage method is not particularly limited. Further, for example, in a case where an adherend is attached to the base material, the hot-melt adhesive may be applied to the base material side and/or the adherend side.

The adherend and the base material may be those which are usually used, and examples thereof include a molding material, a film sheet, and a fibrous material obtained by knitting synthetic fibers or natural fibers in a sheet shape by a spinning machine.

The molding material, the film, and the sheet are not particularly limited, but a thermoplastic resin is preferred. Examples of the thermoplastic resin include a polyolefin resin, a polyester resin, an acetate resin, a polystyrene resin, an ABS resin, a vinyl chloride resin, and a polycarbonate resin. Examples of the polyolefin resin include polyethylene and polypropylene, and examples of the polyester resin include polyethylene terephthalate.

A laminate product obtained by laminating the adherend and the base material with the hot-melt adhesive of the present invention can be used for various use applications, specifically, such as construction, electronic materials, and automobile fields. It is not necessary to use special equipment for producing the laminate product, and the laminate product can be produced using generally known production equipment including a transporter, a coater, a pressing machine, a heater, and a cutting machine. For example, the laminate product can be produced as follows. The base material or the adherend is coated with the hot-melt adhesive of the present invention by a coater while the base material and the adherend are transported by a transporter. The temperature at the time of coating is controlled to a predetermined temperature by a heater. The adherend is slightly pressed to the base material by a pressing machine, and the adherend and the base material are laminated together through the hot-melt adhesive. Subsequently, the adherend and the base material which have been laminated together are allowed to cool and are directly transported by the transporter to solidify the hot-melt adhesive. Then, the base material to which the adherend is laminated is cut into a proper size by a cutting machine.

Since this laminate product has high initial adhesive strength of the hot-melt adhesive of the present invention and excellent heat resistance after moisture curing, the base material and the adherend are hardly peeled off from each other even in the summer. Alternatively, an operator can apply the adhesive to produce a laminate product without using a coater.

[Examples]

Hereinafter, the present invention will be specifically described with reference to Examples. However, the present invention is not limited to these examples.

Various measurements and evaluation methods are as follows.

(Mass average molecular weight)

A converted value with respect to a polystyrene measured by the gel permeation chromatography (GPC) method under the following conditions was denoted by the mass average molecular weight of a polymer.

· High-speed GPC device (manufactured by Tosoh Corporation, product name: HLC-8220GPC)
·· Four columns (Tosoh Corporation, product name: TSKgel SuperHZM-M) connected in series are used.
·· Oven temperature: 40°C
·· Eluent: tetrahydrofuran
·· Sample concentration: 0.1% by mass
·· Flow rate: 0.35 mL/min
·· Injection volume: 1 μL
·· Detector: RI (differential refractometer)

(Volume average particle diameter)

The particle diameter of a dispersion liquid of the obtained polymer and the obtained acrylic resin powder was measured by using a laser diffraction/scattering particle diameter distribution measuring apparatus (manufactured by Horiba, Ltd., product name: LA-960). The median diameter (volume average particle diameter) was used for the particle diameter in the present specification. The relative refractive indices of the resin particles and the dispersion medium were all set to 1.12. Ion exchange water was used as the dispersion medium.

(Softening temperature)

The softening temperature was measured by using a flow tester CFT-100 manufactured by Shimadzu Corporation. In a case where it is measured with a nozzle of 1 mm$\varphi$ × 10 mm under a load of 294 N (30 kgf) and at a temperature rising rate of the constant rate, the temperature rising rate being 3°C/min, a temperature at which 1/2 of 1.0 g of the sample flows out was defined as the softening temperature.

(Solubility in acetone)

1.0 g of an acrylic resin powder was precisely weighed [$W_0$] in a 50 ml sample bottle, 40 ml of acetone was added thereto, and the resulting mixture was dispersed over 1 day. Then, using a centrifuge (high-speed cooling centrifuge, product name: CR22N/CR21N, manufactured by Hitachi Koki Co., Ltd.), centrifugation was carried out at a rotation speed of 12,000 rpm for 60 minutes at a temperature of 2°C to separate an insoluble matter from the soluble matter. Acetone was added again to disperse the insoluble matter, centrifugation was carried out at a rotation speed of 12,000 rpm for 60 minutes at a temperature of 2°C, using a centrifuge (high-speed cooling centrifuge, product name: CR22N/CR21N, manufactured by Hitachi Koki Co., Ltd.) to completely separate the insoluble matter from the soluble matter. The insoluble matter after centrifugation was heated to 60°C in an oven under a nitrogen atmosphere to remove acetone, vacuum dried at 60°C, and the remaining insoluble matter was weighed [$W_1$]. The resultant amount was denoted by the proportion of acetone insoluble matter, that is, the gel fraction. The gel fraction was calculated according to the following expression.

$$\text{Gel fraction (\% by mass)} = \{[W_1]/[W_0]\} \times 100$$

[$W_1$]; Amount of acetone insoluble matter
[$W_0$]; Amount of acrylic resin powder precisely weighed in a 50 ml sample bottle

In a case where the gel fraction was 1% by mass or less, an acrylic resin powder was determined to be soluble in acetone.

(Initial adhesive strength)

Two flat bars (made of wood, width: 1.7 cm, length: 7.5 cm, thickness: 1.5 mm) were prepared, and an area of 1.5 cm × 1.7 cm of one bar was coated with a hot-melt adhesive which had been heat-melted at 120°C. The other wooden flat bar was overlapped with the one bar and sandwiched with a double sided clip, and allowed to stand for 5 minutes to cool and solidify the hot-melt adhesive.
After being allowed to stand, the double sided clip was removed, and a tensile shearing test was carried out with the following tension tester and under the following measurement conditions to measure the initial adhesive strength.
The tension tester: A precision universal tester (product name: AGS-X, manufactured by Shimadzu Corporation)
The measurement conditions: A tension rate of 5.0 mm/min and
The distance between chucks: 50mm
From the obtained measured values, the initial adhesive strength was evaluated according to the following criteria. The case where the initial adhesive strength was 340 kPa or more was regarded to be favorable.

A: 400 kPa or more.
B: 250 kPa or more and less than 400 kPa.
C: less than 250 kPa.

(Open time)

A dried flat bar (made of wood, width: 1.7 cm, length: 7.5 cm, thickness: 1.5 mm) was coated with a hot-melt adhesive, which had been heat-melted, and heated to 120°C in a gear oven. Then, a cycle of attaching, using finger pressure, and rapidly peeling off a piece of Kraft paper was repeated at intervals of 1 minute at room temperature. The open time was defined as the time from when the flat bar was coated with the hot-melt adhesive to when no paper fiber remained on the surface of the adhesive when the piece of Kraft paper was peeled off. From the obtained measured values, the open time was evaluated according to the following criteria. The case where the open time was 15 minutes or more was regarded to be favorable.

A: 15 minutes or more.
B: 10 minutes or more and less than 15 minutes.
C: less than 10 minutes.

<Example 1> Acrylic resin powder (P-1)

[Step I (1)]

583 g of ion exchange water was put into a 2-liter four-necked flask equipped with a thermometer, a nitrogen gas introduction tube, a stirring rod, a dropping funnel, and a cooling tube, and aeration was carried out with nitrogen gas for 30 minutes to substitute the dissolved oxygen in the ion exchange water. Then, aeration with nitrogen gas was stopped, and the temperature was raised to 80°C while stirring at 200 rpm. When the internal temperature reached 80°C, a batch of a monomer mixture (s-1) consisting of 14.72 g of methyl methacrylate and 31.28 g of i-butyl methacrylate was added at one time, 0.80 g of potassium persulfate and 20 g of ion exchange water were added thereto, and the resultant mixture was kept for 45 minutes to obtain a dispersion liquid (S-1) of a polymer.

[Step I (2)]

0.32 g of PELEX OT-P (sodium dioctylsulfosuccinate, active ingredient (emulsifying agent): 70%, manufactured by Kao Corporation), 0.4 g of potassium persulfate, and 44 g of ion exchange water were added to the dispersion liquid (S-1) of a polymer, which had been obtained in [Step I (1)], and at 15 minutes thereafter, an acrylic monomer mixture (a-1) consisting of 48.48 g of methyl methacrylate, 58.24 g of n-butyl methacrylate, 87.28 g of n-butyl acrylate, 2.24 g of PELEX OT-P, 1.92 g of n-octyl mercaptan, and 184 g of ion exchange water was dropwise added over 1.5 hours. After the completion of the dropwise addition, the polymerization was completed by being kept at 80°C for 1 hour, thereby obtaining a dispersion liquid (A-1) of a polymer. The polymerization was carried out in an environment in which aeration was carried out with 25 ml of nitrogen gas per minute.

[Step I (3)]

An acrylic monomer mixture (b-1) consisting of 448.96 g of methyl methacrylate, 103.92 g of i-butyl methacrylate, 3.6 g of methacrylic acid, 3.6 g of hydroxyethyl methacrylate, 4.16 g of PELEX OT-P, 4.48 g of n-octyl mercaptan, and 280 g of ion exchange water was dropwise added over 3.5 hours to the dispersion liquid (A-1) of a polymer, which had been obtained in [Step I (2)]. After the completion of the dropwise addition, the polymerization was completed by being kept at 80°C for 1 hour, thereby obtaining a dispersion liquid (G-1) of a multistage polymer. The polymerization was carried out in an environment in which aeration was carried out with 25 ml of nitrogen gas per minute.

[Step (II)]

This dispersion liquid (G-1) of a multistage polymer was spray-dried by using a spray dryer (manufactured by Okawara Kakohki Co., Ltd., product name: L-8i type) under the conditions of inlet temperature/outlet temperature = 120°C/60°C and a disk rotation speed of 20,000 rpm, thereby obtaining an acrylic resin powder (P-1).
The acrylic resin powder (P-1) had a mass average molecular weight of 42,000, a volume average particle diameter of primary particles of 0.53 $\mu$m, and a volume average particle diameter of secondary particles of 69 $\mu$m. The results are shown in Table 3.

<Example 2> Acrylic resin powder (P-2)

An acrylic resin powder (P-2) was produced in the same manner as in Example 1, except that the composition of the monomer mixture (a) and the monomer mixture (b) was set as shown in Table 2. The results are shown in Table 5.

<Example 3> Acrylic resin powder (P-3)

An acrylic resin powder (P-3) was produced in the same manner as in Example 1, except that the composition of the monomer mixture (a) and the monomer mixture (b) was set as shown in Table 2. The results are shown in Table 5.

<Example 4> Acrylic resin powder (P-4)

An acrylic resin powder (P-4) was produced in the same manner as in Example 1, except that the composition of the monomer mixture (a) and the monomer mixture (b) was set as shown in Table 2. The results are shown in Table 5.

<Example 5> Acrylic resin powder (P-5)

An acrylic resin powder (P-5) was produced in the same manner as in Example 1, except that the composition of the monomer mixture (a) and the monomer mixture (b) was set as shown in Table 2. The results are shown in Table 5.

<Example 6> Acrylic resin powder (P-6)

An acrylic resin powder (P-6) was produced in the same manner as in Example 1, except that the composition of the monomer mixture (a) and the monomer mixture (b) was set as shown in Table 3 and that the time of the dropwise addition in [Step I (2)] was set to 2.5 hours and the time of the dropwise addition in [Step I (3)] was set to 2.5 hours. The results are shown in Table 6.

<Example 7> Acrylic resin powder (P-7)

An acrylic resin powder (P-6) was produced in the same manner as in Example 1, except that the composition of the monomer mixture (a) and the monomer mixture (b) was set as shown in Table 3 and that the time of the dropwise addition in [Step I (2)] was set to 2.5 hours and the time of the dropwise addition in [Step I (3)] was set to 2.5 hours. The results are shown in Table 6.

<Example 8> Acrylic resin powder (P-8)

An acrylic resin powder (P-8) was produced in the same manner as in Example 1, except that the composition of the monomer mixture (a) and the monomer mixture (b) was set as shown in Table 3 and that the time of the dropwise addition in [Step I (2)] was set to 1 hour and the time of the dropwise addition in [Step I (3)] was set to 4 hours. The results are shown in Table 6.

<Example 9> Acrylic resin powder (P-9)

An acrylic resin powder (P-9) was produced in the same manner as in Example 1, except that the composition of the monomer mixture (a) and the monomer mixture (b) was set as shown in Table 3 and that the time of the dropwise addition in [Step I (2)] was set to 4 hours and the time of the dropwise addition in [Step I (3)] was set to 1 hour. The results are shown in Table 6.

<Example 10> Acrylic resin powder (P-10)

An acrylic resin powder (P-8) was produced in the same manner as in Example 1, except that the composition of the monomer mixture (a) and the monomer mixture (b) was set as shown in Table 3 and that the time of the dropwise addition in [Step I (2)] was set to 3 hours and the time of the dropwise addition in [Step I (3)] was set to 2 hours. The results are shown in Table 6.

<Comparative Example 1> Acrylic resin powder (P-11)

An acrylic resin powder (P-11) was produced in the same manner as in Example 6, except that the composition of the monomer mixture (s), the monomer mixture (a), and the monomer mixture (b) was set as shown in Table 4. The results are shown in Table 7.

<Comparative Example 2> Acrylic resin powder (P-12)

An acrylic resin powder (P-12) was produced in the same manner as in Example 1, except that the composition of the acrylic monomer mixture (b) was set as shown in Table 4 and [Step I (2)] was not carried out. The results are shown in Table 7.

<Comparative Example 3> Acrylic resin powder (P-13)

An acrylic resin powder (P-13) was produced in the same manner as in Example 1, except that the composition of the monomer mixture (a) and the monomer mixture (b) was set as shown in Table 4 and that the time of the dropwise addition in [Step I (2)] was set to 3.5 hours and the time of the dropwise addition in [Step I (3)] was set to 1.5 hours.

The results are shown in Table 7.

As a result of checking the acetone solubility of the resin powders obtained in Examples 1 to 10 and Comparative Examples 1 to 3, all of them were soluble in acetone since the gel fraction thereof was 1% by mass or less.

[Table 2]

| | | | Example 1 | Example 2 | Example 3 | Example 4 | Example 5 |
|---|---|---|---|---|---|---|---|
| Sample | | | P-1 | P-2 | P-3 | P-4 | P-5 |
| Step I (1) | Monomer mixture (s) (g) | MMA | 15 | 15 | 15 | 15 | 15 |
| | | n-BMA | | | | | |
| | | i-BMA | 31 | 31 | 31 | 31 | 31 |
| | Polymerization initiator (g) | KPS | 0.8 | 0.8 | 0.8 | 0.8 | 0.8 |
| Step I (2) (Polymer A) | Polymerization initiator (g) | KPS | 0.4 | 0.4 | 0.4 | 0.4 | 0.4 |
| | Monomer mixture (a) (g) | MMA | 48 | 26 | 91 | 49 | 49 |
| | | n-BMA | 58 | 168 | 103 | 58 | 58 |
| | | n-BA | 87 | | | 87 | 87 |
| | | MAA | | | | | |
| | Emulsifying agent (g) | OT-P | 2.24 | 2.24 | 2.24 | 2.24 | 2.24 |
| | Chain transfer agent (g) | n-OM | 1.92 | 1.92 | 1.92 | 1.44 | 1.20 |
| | Ion exchange water (g) | | 184 | 184 | 184 | 184 | 184 |
| Step I (3) (Polymer B) | Polymerization initiator (g) | KPS | | | | | |
| | Monomer mixture (b) (g) | MMA | 449 | 449 | 449 | 449 | 449 |
| | | nBMA | | | | | |
| | | i-BMA | 104 | 104 | 104 | 104 | 104 |
| | | t-BMA | | | | | |
| | | MAA | 3.60 | 3.60 | 3.60 | 3.60 | 3.60 |
| | | 2-HEMA | 3.60 | 3.60 | 3.60 | 3.60 | 3.60 |
| | Emulsifying agent (g) | OT-P | 4.16 | 4.16 | 4.16 | 4.16 | 4.16 |
| | Chain transfer agent (g) | n-OM | 4.48 | 4.48 | 4.48 | 4.48 | 4.48 |
| | Ion exchange water (g) | | 280 | 280 | 280 | 280 | 280 |

[Table 3]

| | | | Example 6 | Example 7 | Example 8 | Example 9 | Example 10 |
|---|---|---|---|---|---|---|---|
| Sample | | | P-6 | P-7 | P-8 | P-9 | P-10 |
| Step I (1) | Monomer mixture (s) (g) | MMA | 15 | 15 | 15 | 15 | 15 |
| | | n-BMA | | | | | |
| | | i-BMA | 31 | 31 | 31 | 31 | 31 |
| | Polymerization initiator (g) | KPS | 0.8 | 0.8 | 0.8 | 0.8 | 0.8 |
| Step I (2) (Polymer A) | Polymerization initiator (g) | KPS | 0.4 | 0.4 | 0.4 | 0.4 | 0.4 |
| | Monomer mixture (a) (g) | MMA | 165 | 106 | 15 | 277 | 260 |
| | | n-BMA | 189 | 248 | 99 | 317 | 174 |
| | | n-BA | | | | | |
| | | MAA | | | | | |
| | Emulsifying agent (g) | OT-P | 3.28 | 2.96 | 1.18 | 4.74 | 3.55 |
| | Chain transfer agent (g) | n-OM | 2.00 | 2.40 | 0.64 | 1.60 | 2.88 |
| | Ion exchange water (g) | | 264 | 264 | 144 | 384 | 304 |
| Step I (3) (Polymer B) | Polymerization initiator (g) | KPS | | | | | |
| | Monomer mixture (b) (g) | MMA | 321 | 321 | 358 | 89 | 179 |
| | | nBMA | | | | | |
| | | i-BMA | 74 | 74 | 274 | 69 | 137 |
| | | t-BMA | | | | | |
| | | MAA | 2.57 | 2.57 | 4.08 | 1.04 | 2.08 |
| | | 2-HEMA | 2.57 | 2.57 | 4.08 | 1.04 | 2.08 |
| | Emulsifying agent (g) | OT-P | 2.96 | 2.96 | 4.74 | 1.18 | 2.37 |
| | Chain transfer agent (g) | n-OM | 3.20 | 3.20 | 2.56 | 0.40 | 2.56 |
| | Ion exchange water (g) | | 200 | 200 | 320 | 80 | 160 |

[Table 4]

| | | | Comparative Example 1 | Comparative Example 2 | Comparative Example 3 |
|---|---|---|---|---|---|
| Sample | | | P-11 | P-12 | P-13 |
| Step I (1) | Monomer mixture (s) (g) | MMA | 26 | 15 | 26 |
| | | n-BMA | 20 | | 20 |
| | | i-BMA | | 31 | |
| | Polymerization initiator (g) | KPS | 0.8 | 0.8 | 0.8 |
| Step I (2) (Polymer A) | Polymerization initiator (g) | KPS | 0.4 | | 0.4 |
| | Monomer mixture (a) (g) | MMA | 147 | | 128 |
| | | n-BMA | | | 383 |
| | | n-BA | 206 | | |
| | | MAA | | | 3.32 |
| | Emulsifying agent (g) | OT-P | 3.12 | | 4.04 |
| | Chain transfer agent (g) | n-OM | 3.76 | | 2.73 |
| | Ion exchange water (g) | | 188 | | 273 |
| Step I (3) (Polymer B) | Polymerization initiator (g) | KPS | | 0.40 | |
| | Monomer mixture (b) (g) | MMA | 333 | 604 | 168 |
| | | nBMA | | | 70 |
| | | i-BMA | | 140 | |
| | | t-BMA | 65 | | |
| | | MAA | 2.56 | 4.80 | 1.54 |
| | | 2-HEMA | | 4.80 | |
| | Emulsifying agent (g) | OT-P | 3.12 | 4.16 | 1.88 |
| | Chain transfer agent (g) | n-OM | 4.24 | 6.40 | 1.27 |
| | Ion exchange water (g) | | 200 | 400 | 127 |

The compounds in Table indicate the following compounds.

· "MMA": methyl methacrylate (manufactured by Mitsubishi Chemical Corporation)
· "n-BMA": n-butyl methacrylate (manufactured by Mitsubishi Chemical Corporation)
· "i-BMA": i-butyl methacrylate (manufactured by Mitsubishi Chemical Corporation)
· "t-BMA": t-butyl methacrylate (manufactured by Mitsubishi Chemical Corporation)
· "n-BA": n-butyl acrylate (manufactured by Mitsubishi Chemical Corporation)
· "MAA": methacrylic acid (manufactured by Mitsubishi Chemical Corporation)
· "2-HEMA": 2-hydroxyethyl methacrylate (manufactured by Mitsubishi Chemical Corporation)
· "n-OM": n-octyl mercaptan (manufactured by FUJIFILM Wako Pure Chemical Corporation)
· "KPS": Potassium persulfate (manufactured by Mitsubishi Gas Chemical Company Inc.)

· "OT-P": PELEX OT-P, disodium dioctylsulfosuccinate, active ingredient (emulsifying agent): 70% (manufactured by Kao Corporation)

[Table 5]

| Acrylic resin powder | | Example 1 | Example 2 | Example 3 | Example 4 | Example 5 |
|---|---|---|---|---|---|---|
| Sample name | | P-1 | P-2 | P-3 | P-4 | P-5 |
| Polymer (A) | Glass transition temperature (°C) | 0.3 | 29.1 | 54.4 | 0.3 | 0.3 |
| | Solubility parameter SPA $((J/cm^3)^{1/2})$ | 19.91 | 19.50 | 19.87 | 19.91 | 19.91 |
| Polymer (B) | Glass transition temperature (°C) | 91 | 91 | 91 | 91 | 91 |
| Multistage polymer (G) | Mass average molecular weight (thousands) | 42 | 40 | 40 | 47 | 50 |
| | Primary particle diameter (volume average, μm) | 0.53 | 0.54 | 0.53 | 0.62 | 0.71 |
| | Secondary particle diameter (volume average, μm) | 69 | 39 | 41 | 51 | 55 |
| | Polymer (A) ratio (% by mass) | 24.2 | 24.2 | 24.2 | 24.2 | 24.2 |
| | Polymer (B) ratio (% by mass) | 70.0 | 70.0 | 70.0 | 70.0 | 70.0 |
| | Softening temperature (°C) | 159 | 169 | 175 | 162 | 163 |
| | Glass transition temperature (°C) | 68.3 | 75.7 | 82.0 | 68.3 | 68.3 |

[Table 6]

| Acrylic resin powder | | Example 6 | Example 7 | Example 8 | Example 9 | Example 10 |
|---|---|---|---|---|---|---|
| Sample name | | P-6 | P-7 | P-8 | P-9 | P-10 |
| Polymer (A) | Glass transition temperature (°C) | 54.4 | 41.2 | 29.1 | 54.4 | 65.7 |
| | Solubility parameter SPA $((J/cm^3)^{1/2})$ | 19.87 | 19.70 | 19.50 | 19.87 | 20.00 |
| Polymer (B) | Glass transition temperature (°C) | 91 | 91 | 78 | 78 | 78 |

(continued)

| Acrylic resin powder | | Example 6 | Example 7 | Example 8 | Example 9 | Example 10 |
|---|---|---|---|---|---|---|
| Sample name | | P-6 | P-7 | P-8 | P-9 | P-10 |
| Multistage polymer (G) | Mass average molecular weight (thousands) | 44 | 53 | 55 | 76 | 51 |
| | Primary particle diameter (volume average, $\mu$m) | 0.67 | 0.72 | 0.50 | 0.50 | 0.71 |
| | Secondary particle diameter (volume average, $\mu$m) | 44 | 35 | 40 | 43 | 37 |
| | Polymer (A) ratio (% by mass) | 44.3 | 44.3 | 14.3 | 74.3 | 54.3 |
| | Polymer (B ratio (% by mass) | 50.0 | 50.0 | 80.0 | 20.0 | 40.0 |
| | Softening temperature (°C) | 174 | 166 | 183 | 180 | 168 |
| | Glass transition temperature (°C) | 74.2 | 78.7 | 70.3 | 59.7 | 70.7 |

[Table 7]

| Acrylic resin powder | | Comparative Example 1 | Comparative Example 2 | Comparative Example 3 |
|---|---|---|---|---|
| Sample name | | P-11 | P-12 | P-13 |
| Polymer (A) | Glass transition temperature (°C) | -7 | - | 38.1 |
| | Solubility parameter SPA ($(J/cm^3)^{1/2}$) | 20.14 | - | 19.70 |
| Polymer (B) | Glass transition temperature (°C) | 106 | 91 | 76 |
| Multistage polymer (G) | Mass average molecular weight (thousands) | 43 | 38 | 69 |
| | Primary particle diameter (volume average, $\mu$m) | 0.79 | 0.64 | 0.63 |
| | Secondary particle diameter (volume average, $\mu$m) | 29 | 44 | 38 |
| | Polymer (A) ratio (% by mass) | 44.2 | 0.0 | 64.3 |
| | Polymer (B ratio (% by mass) | 50.0 | 94.3 | 30.0 |
| | Softening temperature (°C) | 144 | 185 | 148 |
| | Glass transition temperature (°C) | 56 | 91 | 57 |

<Example 11>

[Dissolution step]

41.1 g of polypropylene glycol having a mass average molecular weight of about 2,000 as a polyol (trade name: ADEKA POLYETHER P-2000, manufactured by ADEKA Corporation), 3.0 g of polypropylene glycol having a mass average molecular weight of about 400 (trade name: ADEKA POLYETHER P-400, manufactured by ADEKA Corporation), 0.3 g of "MODAFLOW 2100" (manufactured by DAICEL-ALLNEX Ltd.) as a defoaming agent, and 23.7 g of acrylic resin powder (P-1) were put into a 300 ml four-necked flask equipped with a thermometer, a stirring rod, and a cooling tube, heated such that the internal temperature reached 100°C, stirred for one hour, thereby obtaining a homogeneous resin composition having a solution form.

[Dehydration step under reduced pressure]

The resin composition was heated and stirred at 15 kPa and 100°C for 1 hour, and then dehydrated under reduced pressure.

24.5 g of polyester polyol "HS 2H-351A" (a polyester polyol of hexanediol and adipic acid, manufactured by HOKOKU Co., Ltd., molecular weight: 3,500, melting point: 55°C, OHV = 32 mgKOH/g) as a polyol, 14.0 g of 4,4'-diphenylmethane diisocyanate as an isocyanate, and 0.2 g of 2,2'-dimorpholinodiethyl ether (manufactured by Mitsui Fine Chemicals Inc.) as a curing catalyst were added thereto, and the mixture was stirred at 15 kPa and 100°C for 3 hours. After subsequent cooling, the obtained hot-melt adhesive was collected, sealed, and stored.

<Examples 12 to 20>

Hot-melt adhesives were obtained in the same manner as in Example 11, except that only the kinds of the acrylic resin powders were changed as shown in Tables 8 to 10. The results of initial adhesive strength and open time are shown in Tables 8 to 10.

<Comparative Examples 4 to 6>

Hot-melt adhesives were obtained in the same manner as in Example 11, except that only the kinds of the acrylic resin powders were changed as shown in Tables 8 to 10. The results of initial adhesive strength and open time are shown in Tables 8 to 10.

[Table 8]

|  |  | Example 11 | Example 12 | Example 13 | Example 14 | Example 15 |
|---|---|---|---|---|---|---|
| Acrylic resin powder | Kind | P-1 | P-2 | P-3 | P-4 | P-5 |
| Initial adhesive strength | Strength (kPa) | 501 | 422 | 599 | 523 | 511 |
|  | Evaluation | A | A | A | A | A |
| Open time | Time (minutes) | 16 | 15 | 11 | 13 | 12 |
|  | Evaluation | A | A | B | B | B |

[Table 9]

|  |  | Example 16 | Example 17 | Example 18 | Example 19 | Example 20 |
|---|---|---|---|---|---|---|
| Acrylic resin powder | Kind | P-6 | P-7 | P-8 | P-9 | P-10 |
| Initial adhesive strength | Strength (kPa) | 583 | 332 | 565 | 370 | 352 |
|  | Evaluation | A | B | A | B | B |
| Open time | Time (minutes) | 17 | 17 | 12 | 34 | 21 |
|  | Evaluation | A | A | B | A | A |

[Table 10]

|  |  | Comparative Example 4 | Comparative Example 5 | Comparative Example 6 |
|---|---|---|---|---|
| Acrylic resin powder | Kind | P-11 | P-12 | P-13 |
| Initial adhesive strength | Strength (kPa) | 196 | 504 | 176 |
|  | Evaluation | C | A | C |

(continued)

|  |  | Comparative Example 4 | Comparative Example 5 | Comparative Example 6 |
|---|---|---|---|---|
| Acrylic resin powder | Kind | P-11 | P-12 | P-13 |
| Open time | Time (minutes) | 60 | 9 | 22 |
| | Evaluation | A | C | A |

Fig. 1 is a graph obtained by plotting the results of Examples 11 to 20 and Comparative Examples 4 to 6. Examples 11 to 20 are within a range of y > -0.325x + 124 and 60 > y > 10.

It was found that in Examples 11 to 20, a proper open time is obtained and the initial adhesive strength is large.

It was found that in Comparative Example 4, the open time is too long, and thus the workability is poor, and the initial adhesive strength is small.

It was found that in Comparative Example 5, although the initial adhesive strength is large, the open time is too short and thus the workability is poor.

It was found that in Comparative Example 6, although a proper open time is obtained, the initial adhesive strength is small.

[Industrial Applicability]

The acrylic resin podwer of the present invention can provide an acrylic resin powder suitable for a hot-melt adhesive which has a favorable initial adhesive strength and has a long open time as compared with conventional ones.

**Claims**

1. Acrylic resin powder comprising:

   a multistage polymer (G) of a polymer (A) that contains an alkyl (meth)acrylate ester (ma) monomer unit and a polymer (B) containing a methyl methacrylate monomer unit and an alkyl (meth)acrylate ester (mb) monomer unit, wherein a glass transition temperature of the multistage polymer (G) is 50°C or higher, and a softening temperature that is measured by a flow tester temperature-rising method is 150°C to 200°C.

2. The acrylic resin powder according to Claim 1,

   wherein an alkyl group in the alkyl (meth)acrylate ester (ma) has 4 to 8 carbon atoms, and an alkyl group in the methyl methacrylate and the alkyl (meth)acrylate ester (mb) have 4 to 8 carbon atoms.

3. An acrylic resin powder comprising:

   a multistage polymer (G) obtained by polymerizing a monomer mixture (b) containing methyl methacrylate and an alkyl (meth)acrylate ester (mb) in a presence of a dispersion liquid that contains a polymer (A) obtained by polymerizing a monomer mixture (a) containing an alkyl (meth)acrylate ester (ma), wherein an alkyl group in the alkyl (meth)acrylate ester (ma) has 4 to 8 carbon atoms, an alkyl group in the alkyl (meth)acrylate ester (mb) has 4 to 8 carbon atoms, a glass transition temperature of the multistage polymer (G) is 50°C or higher, a mass average molecular weight of the multistage polymer (G) is 10,000 or more and 300,000 or less, a softening temperature that is measured by a flow tester temperature-rising method is 150°C to 200°C, and the acrylic resin powder is soluble in acetone.

4. The acrylic resin powder according to any one of Claims 1 to 3, wherein a volume average particle diameter of primary particle is 0.1 to 10 μm.

5. The acrylic resin powder according to any one of Claims 1 to 4, wherein a volume average particle diameter of secondary particles is 20 to 100 μm.

6. The acrylic resin powder according to Claim 3,

wherein the monomer mixture (a) further contains another copolymerizable monomer, and
in the monomer mixture (a), a content of the methyl methacrylate is 0% to 60% by mass, a content of the alkyl (meth)acrylate ester (ma) is 40% to 100% by mass, and a content of the other copolymerizable monomer is 0% to 10% by mass with respect to a total mass of the monomer mixture (a).

7. The acrylic resin powder according to any one of Claims 1 to 6,
   wherein a solubility parameter (SPA) of the polymer (A) is 19.50 $(J/cm^3)^{1/2}$ or more and 20.1 $(J/cm^3)^{1/2}$ or less.

8. The acrylic resin powder according to Claim 3,

   wherein the monomer mixture (b) further contains another copolymerizable monomer, and
   in the monomer mixture (b), a content of the methyl methacrylate is 50% to 90% by mass, a content of the alkyl (meth)acrylate ester (mb) is 10% to 50% by mass, and a content of the other copolymerizable monomer is 0% to 10% by mass with respect to a total mass of the monomer mixture (b).

9. The acrylic resin powder according to any one of Claims 1 to 8,
   wherein a content of a monomer unit derived from the polymer (A) is 10% to 80% by mass with respect to a total mass of monomer units constituting the multistage polymer (G).

10. A resin composition that is obtained by dissolving the acrylic resin powder according to any one of Claims 1 to 9 in a polyalkylene glycol.

11. The resin composition according to Claim 10,
    wherein the polyalkylene glycol has a number average molecular weight of 200 to 5,000.

12. The resin composition according to Claim 10 or 11, further comprising:
    a polyester polyol.

13. The resin composition according to any one of Claims 10 to 12, further comprising:
    an isocyanate.

14. A hot-melt adhesive that is formed from the resin composition according to any one of Claims 10 to 13.

15. A hot-melt adhesive that is formed from a resin composition including an acrylic resin powder, a polyalkylene glycol, a polyester polyol, and an isocyanate,

    wherein an initial adhesive strength x (kPa) measured under the following conditions and an open time y (minutes) measured under the following conditions satisfy the following Relational Expressions (3) and (4),

$$y > -0.325x + 124 \ldots \text{(Expression (3))}$$

$$y > 10 \ldots \text{(Expression (4))}$$

(the initial adhesive strength x),
two flat bars made of wood, having a width of 1.7 cm, a length of 7.5 cm, and a thickness of 1.5 mm are prepared, an area of 1.5 cm $\times$ 1.7 cm of one bar is coated with a hot-melt adhesive which has been heat-melted at 120°C, the other wooden flat bar is overlapped with the one bar and sandwiched with a double sided clip and allowed to stand for 5 minutes to cool and solidify the hot-melt adhesive, the double sided clip is removed after being allowed to stand, and a tensile shearing test is carried out with the following tension tester and under the following measurement conditions to measure the initial adhesive strength x,
the tension tester: a precision universal tester (product name: AGS-X, manufactured by Shimadzu Corporation)
the measurement conditions: a tension rate of 5.0 mm/min and
a distance between chucks: 50mm
(the open time y),
a dried flat bar made of wood, having a width of 1.7 cm, a length of 7.5 cm, and a thickness of 1.5 mm is coated with a heat-melted hot-melt adhesive and heated to 120°C in a gear oven, subsequently a cycle of attaching, using finger pressure, and rapidly peeling off a piece of Kraft paper is repeated at intervals of 1 minute at room temperature, and the open time y is defined as a time taken from when the flat bar is coated with the hot-melt adhesive to when no paper fiber remains on a surface of the adhesive when the piece of Kraft paper is peeled off.

16. A production method for an acrylic resin powder, comprising:

a step (I) of carrying out polymerization by dropwise adding a monomer mixture (b) containing methyl methacrylate and an alkyl (meth)acrylate ester (mb) and a chain transfer agent of which an amount is 0.1 to 3 parts by mass with respect to 100 parts by mass of the monomer mixture (b), to a dispersion liquid (A1) that contains a polymer (A) obtained by carrying out polymerization of a monomer mixture (a) containing an alkyl (meth)acrylate ester (ma) with a chain transfer agent of which an amount is 0.1 to 3 parts by mass with respect to 100 parts by mass of the monomer mixture (a), to obtain a dispersion liquid (G1) containing a multistage polymer (G); and a step (II) of spray-drying the dispersion liquid (G1) of the multistage polymer (G) to obtain an acrylic resin powder, wherein an alkyl group in the alkyl (meth)acrylate ester (ma) has 4 to 8 carbon atoms, an alkyl group in the alkyl (meth)acrylate ester (mb) has 4 to 8 carbon atoms, and a softening temperature that is measured by a flow tester temperature-rising method is 150°C to 200°C.

17. The production method for an acrylic resin powder according to Claim 16,

wherein the monomer mixture (a) further contains another copolymerizable monomer, and in the monomer mixture (a), a content of the methyl methacrylate is 0% to 60% by mass, a content of the alkyl (meth)acrylate ester (ma) is 40% to 100% by mass, and a content of the other copolymerizable monomer is 0% to 10% by mass with respect to a total mass of the monomer mixture (a).

18. The production method for an acrylic resin powder according to Claim 16 or 17,

wherein the monomer mixture (b) further contains another copolymerizable monomer, and in the monomer mixture (b), a content of the methyl methacrylate is 50% to 90% by mass, a content of the alkyl (meth)acrylate ester (mb) is 10% to 50% by mass, and a content of the other copolymerizable monomer is 0% to 10% by mass with respect to a total mass of the monomer mixture (b).

19. The production method for an acrylic resin powder according to any one of Claims 16 to 18, wherein a content of a monomer unit derived from the polymer (A) is 10% to 80% by mass with respect to a total mass of monomer units constituting the multistage polymer (G).

20. A production method for a resin composition, comprising:
a step (III) of dissolving the acrylic resin powder obtained by the production method according to any one of Claims 16 to 19 in a polyalkylene glycol.

21. A production method for a hot-melt adhesive, comprising:

a step (III) of dissolving the acrylic resin powder obtained by the production method according to any one of Claims 16 to 19 in a polyalkylene glycol and a polyester polyol to obtain a resin composition; and a step (IV) of mixing the resin composition with an isocyanate to obtain a urethane prepolymer.

FIG. 1

## INTERNATIONAL SEARCH REPORT

| | International application No. |
|---|---|
| | PCT/JP2021/012581 |

### A. CLASSIFICATION OF SUBJECT MATTER

C08F 267/06(2006.01)i; C08L 51/06(2006.01)i; C09J 133/12(2006.01)i; C09J 175/06(2006.01)i; C08G 18/42(2006.01)i; C08G 18/48(2006.01)i
FI:      C08F267/06; C08L51/06; C08G18/48 033; C08G18/42; C09J133/12; C09J175/06

According to International Patent Classification (IPC) or to both national classification and IPC

### B. FIELDS SEARCHED

Minimum documentation searched (classification system followed by classification symbols)
C08F267/06; C08L51/06; C09J133/12; C09J175/06; C08G18/42; C08G18/48

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2019/188930 A1 (MITSUBISHI CHEMICAL CORPORATION) 03 October 2019 (2019-10-03) claims, paragraphs [0007], [0015]-[0033], [0035]-[0061], [0080]-[0110], tables 2-4 | 1-14, 16-21 |
| A | JP 6-145262 A (ROHM AND HAAS COMPANY) 24 May 1994 (1994-05-24) entire text | 1-14, 16-21 |
| A | US 4287106 A (CIBA-GEIGY CORPORATION) 01 September 1981 (1981-09-01) entire text | 1-14, 16-21 |
| A | JP 2019-073668 A (KURARAY CO., LTD.) 16 May 2019 (2019-05-16) entire text | 1-14, 16-21 |
| A | WO 2013/061790 A1 (DIC CORPORATION) 02 May 2013 (2013-05-02) entire text | 1-14, 16-21 |

☒ Further documents are listed in the continuation of Box C.          ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 June 2021 (01.06.2021) | 15 June 2021 (15.06.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2021/012581

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-163821 A (HENKEL AG & CO. KGAA) 22 August 2013 (2013-08-22) entire text | 1-14, 16-21 |

Form PCT/ISA/210 (continuation of second sheet) (January 2015)

## INTERNATIONAL SEARCH REPORT

International application No.

PCT/JP2021/012581

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III**     **Observations where unity of invention is lacking (Continuation of item 3 of first sheet)**

This International Searching Authority found multiple inventions in this international application, as follows:
 See extra sheet

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1-14, 16-21

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

## INTERNATIONAL SEARCH REPORT
Information on patent family members

International application No.

PCT/JP2021/012581

| Patent Documents referred in the Report | Publication Date | Patent Family | Publication Date |
|---|---|---|---|
| WO 2019/188930 A1 | 03 Oct. 2019 | (Family: none) | |
| JP 6-145262 A | 24 May 1994 | EP 587333 A2 entire text CN 1090290 A | |
| US 4287106 A | 01 Sep. 1981 | EP 8110 A2 JP 55-29588 A | |
| JP 2019-073668 A | 16 May 2019 | (Family: none) | |
| WO 2013/061790 A1 | 02 May 2013 | US 2014/0242396 A1 entire text CN 103890032 A | |
| JP 2013-163821 A | 22 Aug. 2013 | US 2006/0084755 A1 entire text EP 1650282 A1 CN 1775887 A | |

Form PCT/ISA/210 (patent family annex) (January 2015)

33

**INTERNATIONAL SEARCH REPORT**

International application No.

PCT/JP2021/012581

```
<Continuation of Box No. III>

(Invention 1) Claims 1, 3, and 16, and claims 2, 4-14, and 17-21 referring to
any one of claims 1, 3, and 16
       Currently, claims 1, 3, and 16 have the special technical feature of an
"acrylic resin powder comprising a multistage polymer (G) of a polymer (A)
containing a (meth)acrylic acid alkyl ester (ma) monomer unit and a polymer
(B) containing each monomer unit of methyl methacrylate and (meth)acrylic
acid alkyl ester (mb), wherein the multistage polymer (G) has a glass
transition temperature of at least 50°C, and a softening temperature of 150-
200°C, as measured by a flow tester heating method", and are thus classified
as invention 1.

(Invention 2) Claim 15
       The invention in claim 15 is not dependent on claim 1, and is not an
invention in the same category that includes all invention-specifying matters
of the invention set forth in claim 1.
       Therefore, the invention in claim 15 is classified as invention 2.
```

Form PCT/ISA/210 (extra sheet) (January 2015)

**EP 4 130 070 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020061289 A
- WO 2018012234 A
- WO 2019188930 A

**Non-patent literature cited in the description**

- Polymer Data Handbook
- *Polymer Engineering and Science,* 1974, vol. 14, 147